# EUROPÄISCHE PATENTSCHRIFT

(11) **EP 3 747 579 B1**
(45) Veröffentlichungstag und Bekanntmachung des Hinweises auf die Patenterteilung: **21.02.2024**
(21) Anmeldenummer: 20175144.3
(22) Anmeldetag: 18.05.2020
(51) Int. Cl.: B23B 31/177, B23B 31/20, B23B 31/40, B23Q 3/06, B24B 41/06, G01M 1/04

(54) **SPANNVORRICHTUNG ZUM EINSPANNEN EINES GEGENSTANDES**
TENSIONING DEVICE FOR TENSIONING AN OBJECT
DISPOSITIF DE SERRAGE PERMETTANT DE SERRER UN OBJET

(30) Priorität: 07.06.2019 DE 102019115599
(43) Veröffentlichungstag der Anmeldung: 09.12.2020
(73) Patentinhaber: Franz Haimer Maschinenbau KG, 86568 Hollenbach-Igenhausen (DE)
(72) Erfinder: Haimer, Franz, 86568 Hollenbach-Igenhausen (DE)
(74) Vertreter: Schwarz, Wolfgang

(56) Entgegenhaltungen:
- WO-A1-2013/029645
- AU-B2- 555 289
- DE-A1-102015 215 757
- DE-U1- 8 703 050

## Beschreibung

### Spannvorrichtung zur Einspannung eines Gegenstands

Die Erfindung betrifft eine Spannvorrichtung zur Einspannung eines Gegenstands nach dem Oberbegriff des Patentanspruchs 1, einen Wuchtadapter für eine Wuchtvorrichtung mit der Spannvorrichtung nach Patentanspruch 20, eine Wuchtvorrichtung mit dem Wuchtadapter nach Patentanspruch 21 sowie ein Spannvorrichtungs-Set nach Patentanspruch 22. Eine Spannvorrichtung nach dem Oberbegriff des Anspruchs 1 ist beispielsweise aus der AU 555 289 B2 bekannt.

Es sind Wuchtvorrichtungen bekannt, bei denen die Wuchtvorrichtung eine ortsfeste bzw. stationäre Basisstation aufweist, die mit austauschbaren Wuchtadaptern ausgestattet werden kann. Die Wuchtadapter können dabei üblicherweise an einer, eine Wuchtadapter-Aufnahme aufweisenden Antriebsspindel der Basisstation festgelegt werden, die Bestandteil einer Antriebseinrichtung der Basisstation zum Drehantrieb eines Wuchtadapters ist. Mittels der an der Basisstation festgelegten Wuchtadapter können auszuwuchtende Werkstücke, wie beispielsweise Fräswerkzeuge, Werkzeugaufnahmen oder Riemenscheiben, aufgenommen bzw. eingespannt werden. Im eingespannten Zustand können die Werkstücke dann mittels der Wuchtvorrichtung ausgewuchtet werden.

Die austauschbaren Wuchtadapter unterscheiden sich in erster Linie dadurch voneinander, dass diese unterschiedliche Spannsysteme und Spannmaße bzw. Spanndurchmesser für die Einspannung von Werkstücken aufweisen. Mittels jedes Wuchtadapters kann daher eine bestimmte Art von Werkstücken eingespannt werden. Beispielsweise werden Fräswerkzeuge und Werkzeugaufnahmen üblicherweise mittels eines Wuchtadapters eingespannt, der eine Einspannung eines Werkstücks von außen ermöglicht. Bestimmte Riemenscheiben oder Schleifscheiben mit einer zentral angeordneten, zylinderförmigen Ausnehmung werden hingegen mittels eines Wuchtadapters eingespannt, der eine Einspannung eines Werkstücks von innen ermöglicht. Mittels der austauschbaren Wuchtadapter wird somit eine besonders einfache Anpassung der Wuchtvorrichtung an unterschiedliche einzuspannende Werkstücke ermöglicht, wodurch die Wuchtvorrichtung besonders flexibel ist.

Weiter ist es auch bekannt, einen Wuchtadapter mit einer Spanneinrichtung auszustatten, die eine Stelleinrichtung aufweist, mittels der der Spanndurchmesser bzw. der Außendurchmesser einer Spannscheibe der Spanneinrichtung verstellt werden kann, dergestalt, dass die Spannscheibe durch Verstellung des Spanndurchmessers gegen ein auf einer Ablagefläche abgelegtes Werkstück gepresst und somit das Werkstück eingespannt werden kann.

Aus der WO 2013/029645 A1 ist beispielsweise ein Wuchtadapter für eine Wuchtvorrichtung bekannt, bei dem eine in Radialrichtung federnde Spannscheibe vorgesehen ist, deren Spanndurchmesser mittels einer Stelleinrichtung verstellt werden kann, um ein auf einer Ablagefläche abgestelltes Werkstück einzuspannen. Dabei ist die Spannscheibe hier an einem, in Radialrichtung gesehen, zentralen Bereich mit einer Hülse verbunden, deren radial innere Wand einen Innenkonus ausbildet. Durch diese Hülse ist ein stabförmiges Betätigungselement geführt, das einen zu dem Innenkonus korrespondierenden Außenkonus aufweist. Gemäß einem ersten Ausführungsbeispiel des Wuchtadapters sind die Konusflächen bzw. die Konusse dabei derart ausgerichtet, dass durch Verlagerung des Betätigungselements relativ zu der Hülse in Spannrichtung die Spannscheibe radial nach außen aufgedrückt wird. Auf diese Weise können Werkstücke hier von innen eingespannt werden. Bei einem zweiten Ausführungsbeispiel des Wuchtadapters sind die Konusflächen hingegen derart ausgerichtet, dass sich durch Verlagerung des Betätigungselements relativ zu der Hülse in Spannrichtung die Spannscheibe durch ihre eigene Elastizität radial nach innen zusammenzieht. Dadurch können Werkstücke von außen eingespannt werden.

Somit sind hier zumindest zwei Wuchtadapter erforderlich, um mittels der Wuchtvorrichtung sowohl von außen einzuspannende Werkstücke als auch von innen einzuspannende Werkstücke auswuchten zu können. Insbesondere der Austausch der Wuchtadapter ist dabei relativ aufwendig. Zudem ist auch die Montage eines derartigen Wuchtadapters aufgrund der Ausgestaltung der Konus-Komponenten aufwendig.

Aufgabe der Erfindung ist es, eine Spannvorrichtung zum Einspannen eines Gegenstands bereitzustellen, die einfach montiert werden kann, eine hohe Flexibilität aufweist und eine effektive Einspannung von Gegenständen ermöglicht.

Diese Aufgabe wird durch die Merkmale des unabhängigen Anspruchs 1 gelöst. Bevorzugte Weiterbildungen sind in den Unteransprüchen offenbart.

Die erfindungsgemäße Spannvorrichtung kann besonders einfach montiert werden, da die Konusse aufweisenden Komponenten der Spanneinrichtung nun Bestandteil des Spannkörpers sind. Dadurch können die Konus-Komponenten unabhängig von den weiteren Bauteilen der Spannvorrichtung vormontiert werden und im vormontierten Zustand mit einem Basiskörper der Spannvorrichtung verbunden werden. Dies vereinfacht die Montage der Spannvorrichtung deutlich. Zudem werden dadurch auch die Gestaltungsmöglichkeiten für die weiteren Komponenten der Spannvorrichtung, insbesondere auch für die Betätigungseinrichtung der Spannvorrichtung, erhöht. Des Weiteren können mittels der erfindungsgemäßen Spannvorrichtung Gegenstände auch besonders effektiv eingespannt werden, da die Spannkräfte hier mittels der Konusflächen des scheibenförmigen Federelements direkt in Radialrichtung nach außen bzw. in einer Spannebene ausgeübt werden. So wird einem ungewünschten "Aufbiegen" des Spannkörpers effektiv entgegengewirkt und eine verbesserte Einspannung von Gegenständen möglich.

Die Begrifflichkeit "Spanndurchmesser" ist hier dabei ausdrücklich in einem weiten Sinne zu verstehen. So kann die Einspannkontur des Spannkörpers nahezu beliebig an die Kontur des einzuspannenden Gegenstands angepasst werden. Die Kontur muss also nicht zwingend kreisförmig oder kreissegmentförmig sein, sondern kann beispielsweise auch ellipsenförmig oder polygonförmig sein. Bevorzugt ist es jedoch, wenn die Einspannkontur des Spannkörpers kreisförmig ist. Ebenso muss ein Gegenstand hier auch nicht zwingend mit einer flächigen Anlage eingespannt werden. So kann ein Gegenstand beispielsweise auch mit einer linienförmigen oder punktförmigen Anlage an dem Spannkörper eingespannt werden. Dabei kann der Gegenstand auch nur an wenigen Punkten eingespannt werden, beispielsweise mit Stiften, die auf dem Spannkörper montiert sind.

Gemäß der erfindungsgemäßen Spannvorrichtung bilden das Spannelement und das Federelement eine, insbesondere scheibenförmige, Montageeinheit bzw. eine Baueinheit aus. Dadurch wird die Montage der Spannvorrichtung deutlich vereinfacht.

Dabei ist vorgesehen, dass diese Montageeinheit in mehreren Drehpositionen an der Spannvorrichtung angeordnet werden kann, wobei die Montageeinheit in einer ersten Drehposition angeordnet werden kann, in der eine erste Hauptflächenwand des Federelements in Anlage mit einem definierten Anlage-Wandbereich ist, wobei die Montageeinheit in einer zweiten Drehposition angeordnet werden kann, in der eine zweite Hauptflächenwand des Federelements in Anlage mit dem definierten Anlage-Wandbereich ist. Auf diese Weise können die, einen Konus aufweisenden Komponenten des Spannkörpers sowohl in einer ersten Drehposition als auch in einer zweiten, um 180° gewendeten Drehposition an der Spannvorrichtung angeordnet werden.

Die Betätigungseinrichtung weist ein, insbesondere stabförmiges und/oder zylinderförmiges, zwischen einer Ausgangsstellung und einer Endstellung verlagerbares Betätigungselement auf, das derart mit dem Spannelement des Spannkörpers gekoppelt werden kann, dass das Betätigungselement das Spannelement bei einer Verlagerung zwischen der Ausgangstellung und der Endstellung mitverlagert und somit das Spannelement relativ zu dem Federelement verlagert wird. Mittels eines derartigen Betätigungselements kann das Spannelement auf einfache Weise relativ zu dem Federelement verlagert werden. Mittels eines stabförmigen bzw. zylinderförmigen Betätigungselements kann dabei, insbesondere im Vergleich zu einem konischen Betätigungselement, eine effektive Gewichtseinsparung realisiert werden. Für einen funktionssicheren Aufbau ist es zudem bevorzugt, wenn das stabförmige Betätigungselement, insbesondere unter Zwischenlage wenigstens einer Kugelführung, linear verlagerbar in einer zylinderförmigen Ausnehmung wenigstens eines Gehäusekörpers geführt ist.

Erfindungsgemäß ist vorgesehen, dass für den Fall, dass die Montageeinheit in der zweiten Drehposition angeordnet ist, das Federelement durch Verlagerung des mit dem Spannelement gekoppelten Betätigungselements von der Endstellung in die Ausgangsstellung bzw. in Spannrichtung nach unten unter Wirkung der zweiten Konusflächen bzw. der zweiten Konusse mittels des Spannelements radial nach außen aufgedrückt wird, wobei für den Fall, dass die Montageeinheit in der ersten Drehposition angeordnet ist, das Federelement durch Verlagerung des mit dem Spannelement gekoppelten Betätigungselements von der Endstellung in die Ausgangsstellung unter Wirkung der ersten Konusflächen bzw. der ersten Konusse mittels des Spannelements radial nach inner zusammengezogen wird. Auf diese Weise können mittels des Federelements und des Spannelements Gegenstände von innen eingespannt werden, wenn die Baueinheit in der ersten Drehposition angeordnet wird. Zudem können mittels des Federelements und des Spannelements auch Gegenstände von außen eingespannt werden, wenn die Baueinheit in der zweiten Drehposition angeordnet wird. So kann die Spannvorrichtung einfach und effektiv an unterschiedliche einzuspannende Gegenstände angepasst werden, wodurch die Spannvorrichtung besonders flexibel ist. Insbesondere ist es dabei auch nicht mehr erforderlich, die gesamte Spannvorrichtung auszutauschen.

Vorzugsweise können das stabförmige Betätigungselement und das Spannelement verdrehfest und/oder lösbar miteinander verbindbar sein. Bevorzugt ist dabei vorgesehen, dass ein Endbereich des stabförmigen Betätigungselements einen unrunden und/oder polygonförmigen Querschnitt aufweist, mit dem das Betätigungselement konturangepasst in wenigstens einer korrespondierenden Ausnehmung des Spannelements angeordnet werden kann. Mittels einer derartigen verdrehfesten Verbindung von Spannelement und Betätigungselement wird zuverlässig sichergestellt, dass Gegenstände in definierter Weise mit hoher Wiederholgenauigkeit eingespannt werden können.

Bevorzugt ist dabei vorgesehen, dass das Spannelement zwei identische zu dem Endbereich korrespondierende Ausnehmungen aufweist, die, in Axialrichtung gesehen, auf gegenüberliegenden Seiten des Spannelements angeordnet sind. So kann das Spannelement auf einfache Weise sowohl in der ersten als auch in der zweiten Drehposition der Baueinheit verdrehfest mit dem Betätigungselement verbunden werden. Bevorzugt sind die beiden Ausnehmung des Spannelements zudem in Axialrichtung voneinander beabstandet.

In einer bevorzugten Ausgestaltung weist der wenigstens eine Konus des Spannelements und/oder der wenigstens eine Konus des Federelements einen Konuswinkel auf, der in einem Bereich von 1° bis 20°, insbesondere in einem Bereich von 1° bis 10°, liegt. Mittels eines derartigen Konuswinkels kann das Federelement funktionssicher in Radialrichtung gespannt und entspannt werden. Der Konuswinkel stellt dabei den Winkel zwischen einer Konusfläche des jeweiligen Konus und der zentralen Längsachse bzw. Drehachse der Spannscheibe dar.

Vorzugsweise sind das Spannelement und das Federelement mittels einer Hintergriffsverbindung und/oder mittels einer flächigen Anlageverbindung, insbesondere lösbar, miteinander verbunden, um eine funktionsoptimierte Verbindung von Spannelement und Federelement zu realisieren. Vorzugsweise ist das Federelement dabei im nicht montierten Zustand der Montageeinheit mittels des in die zentrale Ausnehmung eingesetzten Spannelements in Radialrichtung vorgespannt.

In einer bevorzugten konkreten Ausgestaltung weist das Spannelement einen zentralen, insbesondere zylinderförmigen oder kegelförmigen, Bereich und mehrere, insbesondere drei, von dem zentralen Bereich, insbesondere radial, nach außen abragende Führungsschienen auf, wobei jede Führungsschiene unter Ausbildung eines Hintergriffs konturangepasst in einer korrespondierenden Schienenaufnahme des Federelements einliegt. So kann das Spannelement auf einfache Weise relativ zu dem Federelement verlagerbar mit dem Federelement verbunden werden. Bevorzugt ist dabei vorgesehen, dass jede Führungsschiene im Querschnitt T-förmig ausgebildet ist, um einen besonders effektiven Aufbau zu realisieren. Zweckmäßig können die Führungsschienen, in Umfangsrichtung gesehen, gleichmäßig um den zentralen Bereich verteilt angeordnet sein. Es versteht sich, dass Führungsschienen und Schienenaufnahmen auch umgekehrt angeordnet sein könnten, so dass also Führungsschienen am Federelement angebracht sind, radial nach innen ragen und in korrespondierende Schienenaufnahmen an der Außenseite des Spannelements eingreifen können.

Vorzugsweise ist vorgesehen, dass jede im Querschnitt T-förmige Führungsschiene mit ihrer T-Basis mit dem zentralen Bereich des Spannelements verbunden ist, und dass die dem zentralen Bereich des Spannelements abgewandten Wandbereiche des T-Dachs der Führungsschienen einen Außenkonus des Spannelements ausbilden und in flächiger Anlage mit, einen Innenkonus bildenden Wandbereichen des Federelements sind oder bringbar sind. Zudem ist dann vorgesehen, dass die dem zentralen Bereich des Spannelements zugewandten Wandbereiche des T-Dachs der Führungsschienen einen Innenkonus des Spannelements ausbilden und in flächiger Anlage mit, einen Außenkonus bildenden Wandbereichen des Federelements sind oder bringbar sind. Mittels derartiger Konusse an dem Spannelement und dem Federelement kann das Federelement auf effektive Weise mittels des Spannelements radial nach außen aufgedrückt und radial nach innen zusammengezogen werden.

Zweckmäßig kann das T-Dach der Führungsschienen quaderförmig und/oder blockförmig ausgebildet sein, um einen effektiven Aufbau zu realisieren. Bevorzugt sind die den Außenkonus und den Innenkonus bildenden Konusflächen der Führungsschienen ebenflächig ausgebildet, um die Fertigung des Spannelements zu vereinfachen. Alternativ kann aber auch vorgesehen sein, dass die Konusflächen der Führungsschienen bogenförmig gekrümmt sind.

In einer bevorzugten konkreten Ausgestaltung weist das scheibenförmige Federelement mehrere, in Umfangsrichtung gleichmäßig verteilt angeordnete Federabschnitte auf, mittels derer das Federelement in Radialrichtung gefedert werden kann, wobei, in Umfangsrichtung gesehen, zwischen den Federabschnitten angeordnete Scheibenabschnitte des Federelements über die Federbereiche miteinander verbunden sind. So kann das Federelement auf einfache Weise in Radialrichtung federnd ausgebildet werden.

Für eine effektive Federung können die Federbereiche durch dünnwandige Stege des Federelements gebildet sein, die in Draufsicht auf das Federelement gesehen, einen im Wesentlichen wellenförmigen und/oder mäanderförmigen und/oder bogenförmigen und/oder V-förmigen Verlauf aufweisen.

Besonders bevorzugt weist der Spannkörper ein scheibenförmiges, in Radialrichtung federndes Adapterelement auf und ist somit als Spannscheibe ausgebildet, wobei das Adapterelement eine, insbesondere in Radialrichtung gesehen, zentral angeordnete Ausnehmung aufweist, in die das Federelement der Spannscheibe eingesetzt ist, und wobei das Adapterelement wenigstens eine Spannfläche zur Einspannung eines auszuwuchtenden Werkstücks aufweist. Mittels eines derartigen Adapterelements kann die Spannscheibe auf einfache Weise an einen einzuspannenden Gegenstand bzw. an eine Einspannkontur eines einzuspannenden Gegenstands angepasst werden.

Vorzugsweise sind das Adapterelement und das Federelement mittels einer Hintergriffsverbindung und/oder mittels einer flächigen Anlageverbindung lösbar miteinander verbunden.

In einer konkreten Ausgestaltung kann das Adapterelement mehrere, insbesondere drei, in die Ausnehmung einragende Stege aufweisen, wobei jeder einragende Steg unter Ausbildung eines Hintergriffs konturangepasst in einer korrespondierenden Stegaufnahme des Federelements einliegt. So kann das Adapterelement auf einfache Weise mit dem Federelement verbunden werden. Bevorzugt ist dabei vorgesehen, dass jeder Steg im Querschnitt T-förmig ausgebildet ist. Weiter bevorzugt sind die Stege, in Spannscheiben-Umfangsrichtung gesehen, gleichmäßig verteilt angeordnet. Es versteht sich, dass Ausnehmung und Stege auch umgekehrt angeordnet sein können, so dass also Stege am Federelement angebracht sind, radial nach außen ragen und in eine korrespondierende Ausnehmung an der Innenseite des Adapterelements eingreifen können.

In einer konkreten Ausgestaltung kann das scheibenförmige Adapterelement mehrere, in Umfangsrichtung gleichmäßig verteilt angeordnete Federabschnitte aufweisen, mittels denen das Adapterelement in Radialrichtung federbar ist, wobei, in Umfangsrichtung gesehen, zwischen den Federabschnitten angeordnete Scheibenabschnitte des Adapterelements über die Federabschnitte miteinander verbunden sind. Bevorzugt ist dabei vorgesehen, dass die Federbereiche durch dünnwandige Stege des Adapterelements gebildet sind, die in Draufsicht auf das Adapterelement gesehen, einen im Wesentlichen wellenförmigen und/oder mäanderförmigen und/oder bogenförmigen und/oder V-förmigen Verlauf aufweisen.

Bevorzugt weist das Adapterelement eine Ablagefläche zur Ablage eines auszuwuchtenden Werkstücks auf. Das Adapterelement kann dann auch einen in Spannscheiben-Axialrichtung von der Ablagefläche abragenden, insbesondere radial, innerhalb der Ablagefläche angeordneten, insbesondere zylinderförmigen, Spannsockel aufweisen, dessen der Ablagefläche zugewandte Wandbereiche Spannflächen zur Einspannung eines Gegenstands ausbilden. Mittels eines derartigen Adapterelements können Gegenstände auf einfache Weise von innen eingespannt werden. Grundsätzlich kann die Ablagefläche aber auch durch einen außerhalb der Spannscheibe angeordneten Bereich der Spannvorrichtung gebildet sein.

Alternativ kann das Adapterelement auch mehrere in Spannscheiben-Axialrichtung von der Ablagefläche abragende, insbesondere radial, außerhalb der Ablagefläche angeordnete, insbesondere dünnwandige, Spannstege aufweisen, deren der Ablagefläche zugewandte Wandbereiche Spannflächen zur Einspannung des Werkstücks ausbilden. Mittels eines derartigen Adapterelements ist es möglich, Gegenstände von außen einzuspannen. Bevorzugt ist dabei vorgesehen, dass die Spannstege, in Draufsicht auf das Adapterelement gesehen, einen bogenförmigen Verlauf aufweisen.

In einer weiteren alternativen Ausgestaltung kann der Spannkörper auch mehrere mit dem Federelement verbundene blockförmige und/oder quaderförmige Adapterelemente aufweisen, wobei jedes Adapterelement wenigstens eine Spannfläche zur Einspannung eines Gegenstands aufweist. Bevorzugt ist dabei vorgesehen, dass jedes blockförmige Adapterelement mittels einer Hintergriffsverbindung und/oder einer, insbesondere flächigen, Anlageverbindung mit dem Federelement verbunden ist. Zudem kann jedes blockförmige Adapterelement eine Ablagefläche zur Ablage eines einzuspannenden Gegenstands aufweisen. Alternativ kann die Ablagefläche aber auch durch einen außerhalb des Spannkörpers angeordneten Bereich der Spannvorrichtung gebildet sein.

Zweckmäßig ist eine Fixiereinrichtung vorgesehen, mittels der der Spannkörper an einem Basiskörper der Spannvorrichtung festgelegt ist.

In einer bevorzugten konkreten Ausgestaltung weist die Fixiereinrichtung ein Fixierelement mit einem Spannring auf, der in Anlage mit wenigstens einem dem Basiskörper abgewandten Wandbereich des Federelements und/oder des Adapterelements ist oder bringbar ist, wobei das Fixierelement mehrere, insbesondere axial, von dem Spannring abragende, insbesondere zylinderförmige, Eingriffsstege aufweist, die in korrespondierende Ausnehmungen des Federelements und/oder des Adapterelements eingreifen. Bevorzugt kann das Fixierelement dabei mittels lösbarer Schraubverbindungen mit dem Basiskörper verbunden werden.

Weiter bevorzugt weist die Betätigungseinrichtung zumindest einen Teil einer Antriebseinrichtung bzw. eines Aktuators zur, insbesondere linearen, Verlagerung des Spannelements relativ zu dem Federelement auf. Die Antriebseinrichtung kann beispielsweise durch eine pneumatische, hydraulische oder elektromechanische Antriebseinrichtung gebildet sein. Die elektromechanische Antriebseinrichtung kann beispielsweise als Elektromotor ausgebildet sein. Bevorzugt weist die Antriebseinrichtung einen weggesteuerten Kolben oder eine weggesteuerte Spindel zur linearen Verlagerung des Spannelements, insbesondere in beiden Linearrichtungen, auf.

Zur Lösung der bereits genannten Aufgabe wird ferner auch ein Wuchtadapter für eine Wuchtvorrichtung mit der erfindungsgemäßen Spannvorrichtung beansprucht.

Zudem wird auch eine Wuchtvorrichtung mit dem Wuchtadapter beansprucht.

Die sich durch den Wuchtadapter und die Wuchtvorrichtung ergebenden Vorteile sind identisch mit den bereits gewürdigten Vorteilen der erfindungsgemäßen Spannvorrichtung, so dass diese an dieser Stelle nicht wiederholt werden.

Zweckmäßig kann die Wuchtvorrichtung eine Basisstation mit einer Wuchtadapter-Aufnahme zur Aufnahme des Wuchtadapters aufweisen. Bevorzugt weist die Basisstation eine Dreh-Antriebseinrichtung zum Drehantrieb des aufgenommenen Wuchtadapters und/oder zumindest einen Teil einer Antriebseinrichtung zur, insbesondere linearen, Verlagerung des Spannelements relativ zu dem Federelement auf.

Alternativ zu einem Wuchtadapter kann die erfindungsgemäße Spannvorrichtung auch an einer Greifvorrichtung, beispielsweise an einem Robotergreifer oder Roboterarm, vorgesehen sein. Mittels der Spannvorrichtung können Gegenstände dann einfach und effektiv gegriffen bzw. aufgenommen werden.

Des Weiteren wird auch ein Spannvorrichtungs-Set mit einer erfindungsgemäßen Spannvorrichtung beansprucht, mit zusätzlich einem Basiskörper, und mehreren Adapterelementen, wobei das Federelement, das Spannelement und wenigstens ein Adapterelement zu dem Spannkörper verbunden werden können, der mittels einer Fixiereinrichtung an dem Basiskörper festgelegt werden kann. Zudem ist vorgesehen, dass jedes Adapterelement wenigstens eine Spannfläche zur Einspannung eines auszuwuchtenden Werkstücks aufweist, wobei sich zumindest ein Teil der Adapterelemente zumindest in der Anordnung und/oder Ausgestaltung der wenigstens einen Spannfläche unterscheiden.

Mittels des Spannvorrichtungs-Sets wird ein modularer Aufbau realisiert, mittels dessen die Spannvorrichtung auf einfache Weise an unterschiedliche einzuspannende Gegenstände angepasst werden kann.

Die Wörter "ein" bzw. "eine" nicht als Zahlwörter, sondern als unbestimmte Artikel zu verstehen.

Die oben beschriebenen Eigenschaften, Merkmale und Vorteile der Erfindung sowie die Art und Weise, wie diese erreicht werden, werden klarer und deutlicher verständlich im Zusammenhang mit der folgenden Beschreibung der Ausführungsbeispiele der Erfindung, die im Zusammenhang mit der bzw. den Zeichnungen/Figuren näher erläutert wird/werden (gleiche Bauteile/Komponenten und Funktionen weisen in den Zeichnungen/Figuren gleiche Bezugszeichen auf).

Die Ausführungsbeispiele dienen der Erläuterung der Erfindung und beschränken die Erfindung nicht auf darin angegebene Kombinationen von Merkmalen. Die Erfindung ist durch die nachfolgenden Ansprüche definiert.

Es zeigen:
Fig. 1 in einer perspektivischen Darstellung ein erstes Ausführungsbeispiel eines Wuchtadapters mit einer erfindungsgemäßen Spannvorrichtung;
Fig. 2 eine Schnittdarstellung entlang der Schnittebene A-A aus Fig. 1;
Fig. 3 in einer perspektivischen Darstellung ein Federelement der Spannvorrichtung;
Fig. 4 eine Draufsicht auf das Federelement;
Fig. 5 in einer perspektivischen Darstellung das Spannelement;
Fig. 6 eine Draufsicht auf das Spannelement;
Fig. 7 in einer perspektivischen Darstellung ein Adapterelement des Wuchtadapters;
Fig. 8 eine Draufsicht auf das Adapterelement;
Fig. 9 in einer Darstellung gemäß Fig. 2 ein zweites Ausführungsbeispiel eines Wuchtadapters mit einer erfindungsgemäßen Spannvorrichtung;
Fig. 10 in einer perspektivischen Darstellung ein Adapterelement des Wuchtadapters;
Fig. 11 eine Draufsicht auf das Adapterelement;
Fig. 12 in einer perspektivischen Darstellung ein drittes Ausführungsbeispiel eines Wuchtadapters mit einer erfindungsgemäßen Spannvorrichtung;
Fig. 13 in einer Ansicht von oben einen Teil des Wuchtadapters;
Fig. 14 in einer perspektivischen Darstellung ein Adapterelement des Wuchtadapters;
Fig. 15 in einer perspektivischen Darstellung ein viertes Ausführungsbeispiel eines Wuchtadapters mit einer erfindungsgemäßen Spannvorrichtung;
Fig. 16 in einer perspektivischen Darstellung ein Adapterelement des Wuchtadapters;
Fig. 17in einer perspektivischen Darstellung ein fünftes Ausführungsbeispiel eines Wuchtadapters mit einer erfindungsgemäßen Spannvorrichtung; und
Fig. 18 eine Schnittdarstellung entlang der Schnittebene B-B aus Fig. 17.

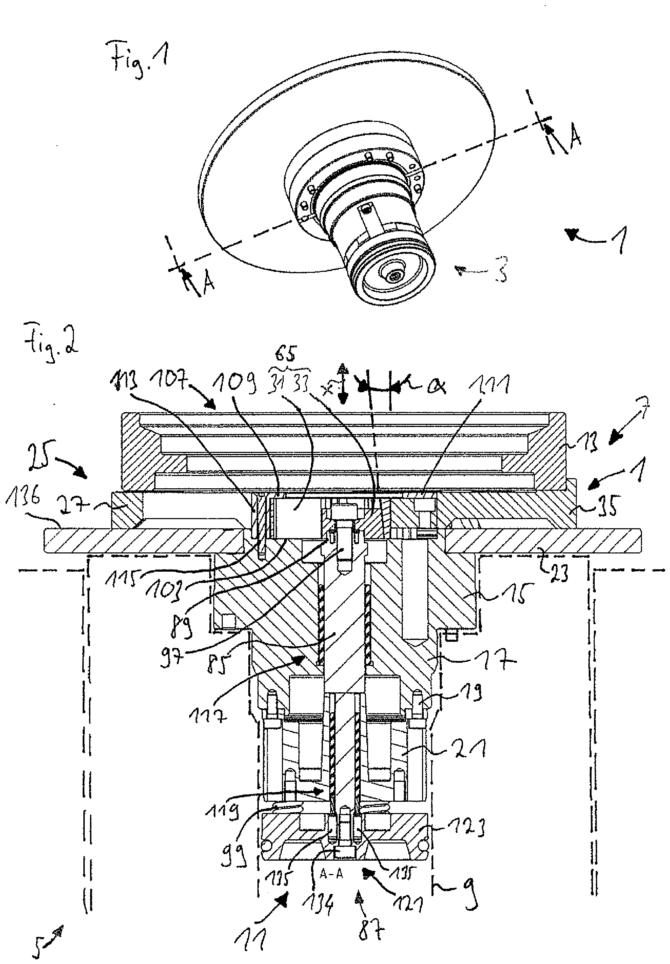

In Fig. 1 ist ein erstes Ausführungsbeispiel eines Wuchtadapters 1 mit einer erfindungsgemäßen Spannvorrichtung gezeigt. Der Wuchtadapter 1 weist einen Fixierbereich 3 auf, mit dem der Wuchtadapter 1 an einer in Fig. 2 mit gestrichelten Linien angedeuteten ortsfesten Basisstation 5 festgelegt werden kann. Der Wuchtadapter 1 bildet zusammen mit der Basisstation 5 eine Wuchtvorrichtung 7 aus, mittels der Werkstücke ausgewuchtet werden können.

Die Basisstation 5 weist eine hier ebenfalls mit gestrichelten Linien angedeutete Antriebsspindel 9 mit einer Wuchtadapter-Aufnahme 11 auf, in der der Wuchtadapter 1 mit seinem Fixierbereich 3 angeordnet werden kann. Die Antriebsspindel 9 ist Bestandteil einer hier nicht weiter gezeigten Antriebseinrichtung der Basisstation 5 für einen Drehantrieb des Wuchtadapters 1. Bei der in Fig. 2 gezeigten Darstellung ist zudem ein auszuwuchtendes Werkstück 13 in den Wuchtadapter 1 eingespannt.

Wie aus Fig. 2 weiter hervorgeht, weist der Wuchtadapter 1 einen Adapter-Basiskörper 15 auf, der den Fixierbereich 3 mitumfasst. Der Adapter-Basiskörper 15 weist einen im Wesentlichen rotationssymmetrischen ersten Gehäusekörper 17 auf, der über Schraubverbindungen 19 mit einem zweiten, ebenfalls im Wesentlichen rotationssymmetrischen Gehäusekörper 21 des Adapter-Basiskörpers 15 verbunden ist, der unterhalb des Gehäusekörpers 17 bzw. an einer, einer Abstellfläche der Basisstation 5 zugewandten Seite des Gehäusekörpers 17 angeordnet ist. Zudem ist der Gehäusekörper 17 an einem oberen Bereich mit einem Scheibenkörper 23 verbunden, der nach außen von dem Gehäusekörper 17 abragt und eine Planauflage 136 des Adapter-Basiskörpers 15 ausbildet.

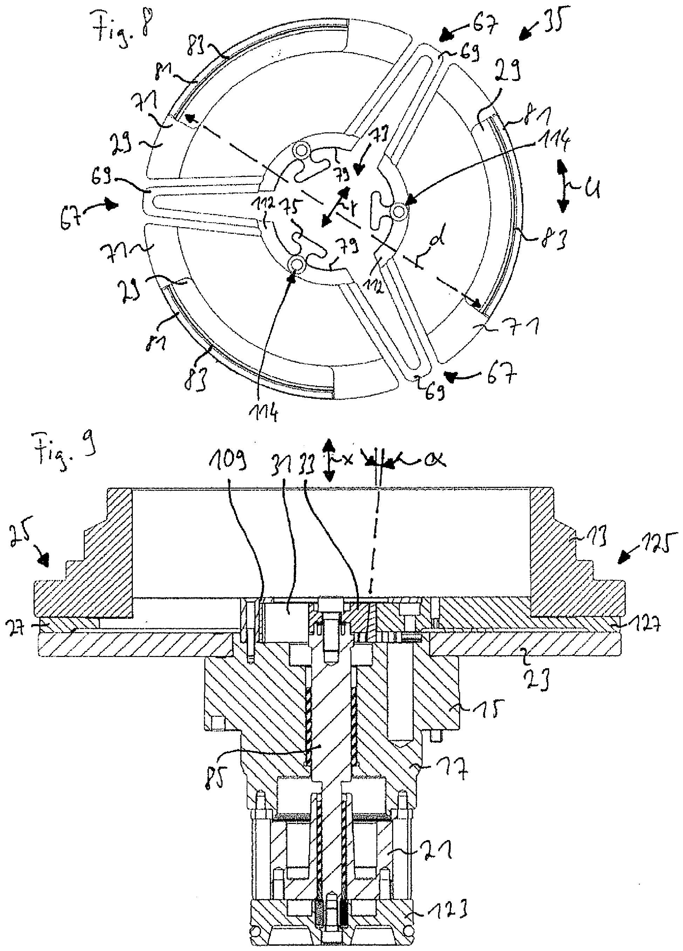

Des Weiteren weist der Wuchtadapter 1 auch eine Spanneinrichtung 25 zur Einspannung auszuwuchtender Werkstücks auf. Die Spanneinrichtung 25 weist einen als Spannscheibe ausgebildeten Spannkörper 27 auf, dessen Spanndurchmesser d (Fig. 8) verstellt werden kann, um ein auf Ablageflächen 29 (Fig. 8) der Spannscheibe 27 abgelegtes Werkstück einspannen zu können. Die Spannscheibe 27 ist hier dreiteilig ausgebildet und weist ein Federelement 31, ein Spannelement 33 und ein Adapterelement 35 auf.

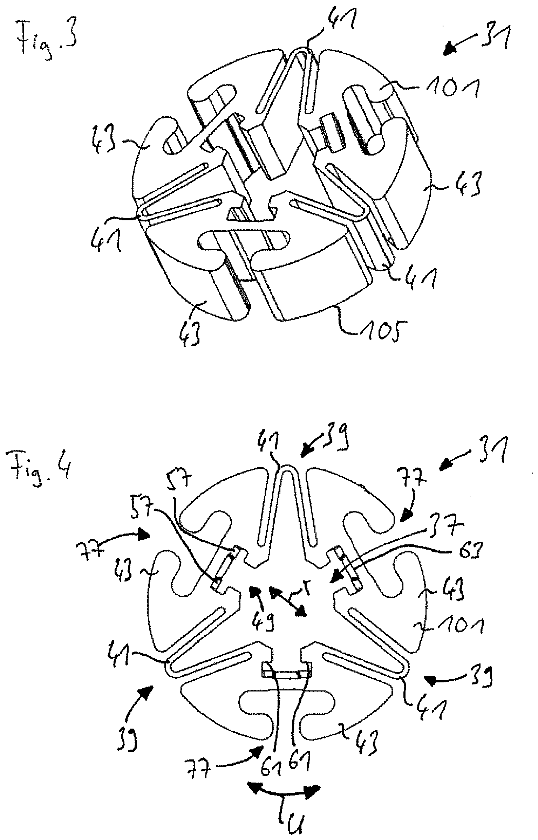

Gemäß den Fig. 3 und 4 ist das Federelement 31 scheibenförmig ausgebildet. Zudem weist das Federelement 31 mehrere, hier beispielhaft drei, in Umfangsrichtung U gleichmäßig verteilt angeordnete Federabschnitte 39 auf, mittels derer das Federelement 31 in Radialrichtung r gefedert werden kann. Konkret sind die Federbereiche 39 hier durch dünnwandige Stege 41 des Federelements 31 gebildet, die in der, in Fig. 4 gezeigten Draufsicht auf das Federelement 31 gesehen, einen im Wesentlichen V-förmigen Verlauf aufweisen. Über die Federabschnitte 39 bzw. über die Stege 41 sind, in Umfangsrichtung U gesehen, zwischen den Stegen 41 angeordnete Scheibenabschnitte 43 des Federelements 39 miteinander verbunden. Dadurch weist das Federelement 31 definierte Federeigenschaften in Radialrichtung r auf. Weiter weist das Federelement 31 an einem, in Radialrichtung r gesehen, zentralen Bereich eine Ausnehmung 37 auf, in die das Spannelement 33 eingesetzt werden kann.

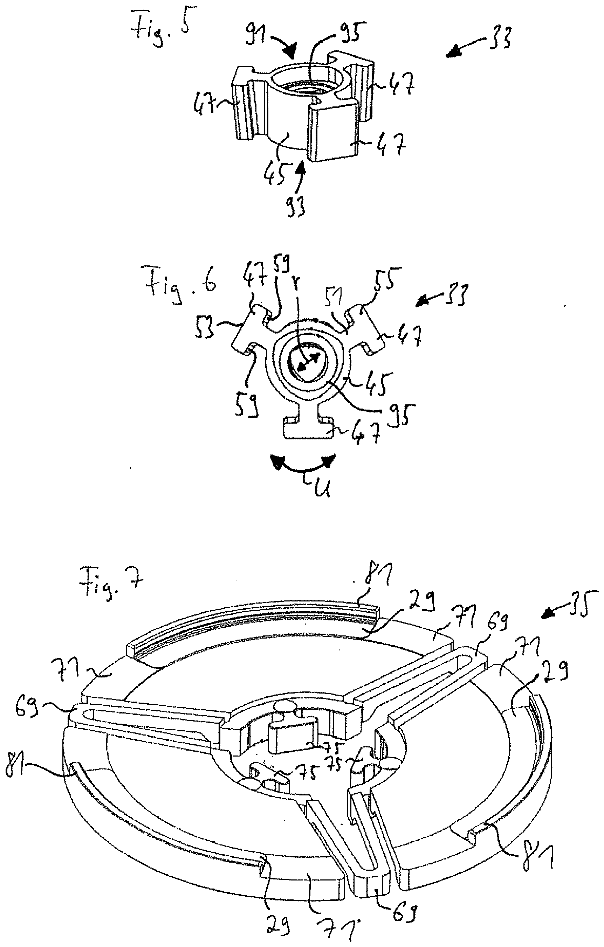

Wie aus den Fig. 5 und 6 hervorgeht, weist das Spannelement 33 einen zentralen, hier beispielhaft zylinderförmigen Bereich 45 und mehrere, hier beispielhaft drei, von dem zylinderförmigen Bereich 45 nach außen abragende Führungsschienen 47 auf. Jede Führungsschiene 47 ist hier beispielhaft im Querschnitt T-förmig. Mittels dieser Führungsschienen 47 kann das Spannelement 33 mit dem Federelement 31 verbunden werden. Die Führungsschienen 47 sind hier dabei, in Umfangsrichtung U gesehen, gleichmäßig um den zentralen Bereich 45 verteilt angeordnet.

Gemäß Fig. 5 und 6 ist hier jede im Querschnitt T-förmige Führungsschiene 47 mit einer T-Basis 51 bzw. mit einem freien Ende der T-Basis 51 mit dem zentralen Bereich 45 des Spannelements 33 verbunden. Die T-Basis 51 ragt dabei in Radialrichtung r von dem zylinderförmigen zentralen Bereich 45 des Spannelements 33 ab. Ein T-Dach 55 der Führungsschienen 47 ist zudem quaderförmig ausgebildet und von dem zentralen Bereich 45 des Spannelements 33 beabstandet.

Im verbundenen Zustand von Spannelement 33 und Federelement 31 greifen die Führungsschienen 47 unter Ausbildung eines Hintergriffs konturangepasst in korrespondierende Schienenaufnahmen 49 des Federelements 31 ein. Die Führungsschienen 47 und die Schienenaufnahmen 49 sind hier dabei derart ausgebildet, dass das Spannelement 33 relativ zu dem Federelement 31 in Spannscheiben-Axialrichtung bzw. Längsachsenrichtung x verlagert werden kann. In Umfangsrichtung U gesehen, zwischen den Führungsschienen 47 befindliche Wandbereiche des Spannelements 33 sind hier zudem von dem Federelement 31 beabstandet.

Des Weiteren bilden die dem zentralen Bereich 45 des Spannelements 33 abgewandten Wandbereiche 53 des T-Dachs 55 der Führungsschienen 47 einen Außenkonus des Spannelements 33 aus. Dabei können die Wandbereiche 53 in flächige Anlage mit, einen Innenkonus bildenden Wandbereichen 57 des Federelements 31 gebracht werden. Die dem zentralen Bereich 45 des Spannelements 33 zugewandten Wandbereiche 59 des T-Dachs 55 der Führungsschienen 47 bilden zudem einen Innenkonus des Spannelements 33 aus. Diese Wandbereiche 59 können in flächige Anlage mit, einen Außenkonus bildenden Wandbereichen 61 des Federelements 31 gebracht werden. Die Konusse des Spannelements 33 und des Federelements 31 weisen hier dabei einen Konuswinkel α (Fig. 2) zwischen einer Konusfläche und der Längsachse x auf, der in einem Bereich von 1° bis 20° liegt.

Durch diese Ausgestaltung der Führungsschienen 47 und der Schienenaufnahmen 49 wird das Federelement 31 bei einer Verlagerung des Spannelements 33 relativ zu dem Federelement 31 in einer ersten Axialrichtung von dem Spannelement 31 in Radialrichtung r aufgedrückt bzw. aufgespreizt, so dass sich der Durchmesser des Federelements 33 vergrößert. Bei einer Verlagerung des Spannelements 33 relativ zu dem Federelement 31 in einer entgegengesetzten zweiten Axialrichtung wird das Federelement 31 hingegen von dem Spannelement 31 in Radialrichtung r zusammengezogen, so dass sich der Durchmesser des Federelements 33 verringert.

Des Weiteren sind die Konusflächen der Führungsschienen 47 und der Schienenaufnahmen 49 hier ebenflächig ausgebildet. Alternativ wäre es auch möglich, die Konusflächen des T-Dachs bogenförmig gekrümmt auszubilden. Weiter weist hier jede Schienenaufnahme 49 des Federelements 31 zwei, in Umfangsrichtung U gesehen, voneinander beabstandete Wandbereiche 57 auf, mit denen das Federelement 31 in Anlage mit dem Wandbereich 53 der jeweiligen Führungsschiene 47 ist. In Umfangsrichtung U gesehen, zwischen diesen voneinander beabstandeten Wandbereichen 57 weist jede Schienenaufnahme 49 eine Vertiefung 63 radial nach außen auf. Dadurch wird die Verlagerung des Spannelements 33 relativ zu dem Federelement 33 vereinfacht.

Das Federelement 31 und das Spannelement 33 bilden eine Montageeinheit 65 aus. Diese Montageeinheit 65 kann mit dem Adapterelement 35 lösbar zu der Spannscheibe 27 verbunden werden.

Gemäß den Fig. 7 und 8 ist das Adapterelement 35 ebenfalls scheibenförmig ausgebildet. Zudem weist das Adapterelement 35 mehrere, in Umfangsrichtung U gleichmäßig verteilt angeordnete Federabschnitte 67 auf, mittels denen das Adapterelement 35 in Radialrichtung r gefedert werden kann. Konkret sind die Federabschnitte 67 hier durch dünnwandige Stege 69 des Adapterelements 35 gebildet, die, in der in Fig. 8 gezeigten Draufsicht auf das Adapterelement 35 gesehen, einen im Wesentlichen V-förmigen Verlauf aufweisen. Über die Federabschnitte 67 bzw. über die Stege 69 sind, in Umfangsrichtung U gesehen, zwischen den Stegen 69 angeordnete Scheibenabschnitte 71 des Adapterelements 35 miteinander verbunden. Durch die Stege 69 weist das Adapterelement 35 somit definierte Federeigenschaften in Radialrichtung r auf.

Weiter weist das Adapterelement 35 auch eine, in Radialrichtung r gesehen, zentrale Ausnehmung 73 auf, in die das Federelement 31 bzw. die Montageeinheit 65 eingesetzt werden können. Für die lösbare Verbindung des Adapterelements 35 mit dem Federelement 31 weist das Adapterelement 35 mehrere, hier beispielhaft drei, in die Ausnehmung 73 einragende Stege 75 auf. Jeder einragende Steg 75 ist hier beispielhaft im Querschnitt T-förmig. Zudem sind die Stege 75, in Umfangsrichtung U gesehen, gleichmäßig verteilt angeordnet.

Im verbundenen Zustand von Adapterelement 35 und Federelement 31 sind die Stege 75 unter Ausbildung eines Hintergriffs konturangepasst in korrespondierenden Stegaufnahmen 77 des Federelements 31 angeordnet. Dabei können hier sowohl die Stege 75 als auch die, in Umfangsrichtung U gesehen, zwischen den Stegen 75 befindlichen, die Ausnehmung 73 nach außen begrenzenden Wandbereiche 79 des Adapterelements 35 in flächiger Anlage mit dem in die Ausnehmung 73 eingesetzten Federelement 31 sein.

Wie aus den Fig. 7 und 8 weiter hervorgeht, weist das Adapterelement 35 die Ablagefläche 29 des Wuchtadapters 1 zur Ablage eines auszuwuchtenden Werkstücks auf. Zudem weist das Adapterelement 35 auch mehrere in Axialrichtung x von der Ablagefläche 29 abragende, radial außerhalb der Ablagefläche 29 angeordnete dünnwandige Spannstege 81 auf. Die der der Ablagefläche 29 zugewandten bzw. radial inneren Wandbereiche 83 der Spannstege 81 bilden dabei die Spannflächen zur Einspannung eines auszuwuchtenden Werkstücks und somit auch den Spanndurchmesser d der Spannscheibe 27 aus. Die Spannstege 81 weisenhier, in der in Fig. 8 gezeigten Draufsicht auf das Adapterelement 35 gesehen, einen bogenförmigen Verlauf auf. Zudem sind die Spannstege 81 in Umfangsrichtung voneinander beabstandet, wobei jedem Scheibenabschnitt 71 ein Spannsteg 81 zugeordnet ist.

Mittels des Adapterelements 35 kann ein auszuwuchtendes Werkstück von außen eingespannt werden. Hierzu werden im montierten Zustand der Spannscheibe 27 das Adapterelement 35 und das Federelement 31 bei einer Verlagerung des Spannelements 33 relativ zu dem Federelement 31 in einer ersten Axialrichtung in Radialrichtung r zusammengezogen, so dass sich der Spanndurchmesser d verringert. Zum Lösen eines eingespannten Werkstücks wird das Spannelements 33 relativ zu dem Federelement 31 in einer entgegengesetzten zweiten Axialrichtung verlagert. Dadurch werden das Federelement 31 und das Adapterelement 35 von dem Spannelement 31 in Radialrichtung r aufgedrückt, so dass sich der Spanndurchmesser d vergrößert.

Des Weiteren kann das Spannelement 33 der Spannscheibe 27 hier auch mittels einer Schraubverbindung lösbar und verdrehfest mit einem, hier beispielhaft stabförmigen, Betätigungselement 85 (Fig. 2) einer Betätigungseinrichtung 87 des Wuchtadapters 1 verbunden werden. Hierzu weist ein Endbereich 89 des stabförmigen Betätigungselement 85 einen unrunden, hier beispielhaft polygonförmigen, Querschnitt auf, mit dem das Betätigungselement konturangepasst in zwei identischen Ausnehmungen 91, 93 (Fig. 5) an dem zentralen Bereich 45 des Spannelements 33 angeordnet werden kann. Die Ausnehmungen 91, 93 sind hier dabei, in Spannscheiben-Axialrichtung x gesehen, auf gegenüberliegenden Seiten des zentralen Bereichs 45 angeordnet sowie in Axialrichtung x voneinander beabstandet. In Axialrichtung x gesehen, zwischen den Ausnehmungen 91, 93 weist der zentrale Bereich 45 hier zudem eine ringförmige, radial nach innen abragende Schulter 95 mit einem Innengewinde auf. Durch die Ausnehmungen 91, 93 und den dazwischen liegenden verengten Bereich kann eine Schraube 97 geführt und in eine stirnseitige Gewindebohrung des stabförmigen Betätigungselements 85 eingeschraubt werden.

Zur Verbindung des Spannelements 33 mit dem Betätigungselement 85 wird somit zunächst das Betätigungselement 85 mit dem Endbereich 89 in eine der Ausnehmungen 91, 93 eingeführt. Anschließend wird die Schraube 97 durch die gegenüberliegende Ausnehmung 91, 93 und den verengten Bereich geführt und in die Gewindebohrung eingeschraubt, bis sie mit ihrem Schraubenkopf an der Ringschulter 95 anliegt.

Mittels des Innengewindes der Ringschulter 95 wird das Lösen der Verbindung von Spannelement 33 und Betätigungselement 85 vereinfacht, indem hier eine Schraube eingeschraubt werden kann, mittels der das Spannelement 33 von dem Betätigungselement 85 abgedrückt werden kann.

Durch diese Ausgestaltung des Spannelements 33 mit den zwei Ausnehmungen 91, 93 ist es möglich, die Montageeinheit 65 in zwei Drehpositionen an dem Wuchtadapter 1 anzuordnen. Die Montageeinheit 65 kann daher, wie in Fig. 2 gezeigt, in einer ersten Drehposition angeordnet werden, in der eine erste Hauptflächenwand 101 (Fig. 3) des Federelements 31 in Anlage mit einem definierten Anlage-Wandbereich 103 (Fig. 2) des Adapter-Basiskörpers 15 des Wuchtadapters 1 ist. Zudem kann die Montageeinheit 65 auch in einer zweiten Drehposition angeordnet werden, in der eine zweite Hauptflächenwand 105 (Fig. 3) des Federelements 31 in Anlage mit dem definierten Anlage-Wandbereich 103 ist. In jeder dieser Drehpositionen kann die Montageeinheit 65 über das Spannelement 33 mit dem Betätigungselement 85 verbunden bzw. gekoppelt werden.

Wie weiter in Fig. 2 gezeigt ist, kann die Spannscheibe 27 zudem mittels einer Fixiereinrichtung 107 (Fig. 2) an dem Adapter-Basiskörper 15 des Wuchtadapters 1 festgelegt werden. Die Fixiereinrichtung 107 weist ein Fixierelement 109 mit einen Spannring 111 auf, der im montierten Zustand des Wuchtadapters 1 in flächiger Anlage mit den dem Adapter-Basiskörper 15 abgewandten Wandbereichen 112 (Fig. 8) des Adapterelements 35 ist oder einen schmalen Spalt mit diesem bildet. Zudem weist das Fixierelement 109 mehrere, hier beispielhaft drei, axial von dem Spannring 111 abragende, zylinderförmige Eingriffsstege 113 (Fig. 2) auf, die in korrespondierende Ausnehmungen 114 (Fig. 8) des Adapterelements 35 eingreifen. Über die Eingriffstege 113 ist das Fixierelement 109 zudem lösbar mit dem Adapter-Basiskörper 15 verbunden. Dabei ist hier durch jeden Eingriffssteg 113 eine Schraube 115 geführt, die in eine korrespondierende Gewindebohrung des ersten Gehäusekörpers 17 eingeschraubt ist.

Wie weiter aus Fig. 2 hervorgeht, ist das stabförmige Betätigungselement 85 unter Zwischenlage von Kugelführungen, insbesondere Kugelkäfigen, linear verlagerbar in zylinderförmigen Ausnehmungen 117, 119 des ersten und zweiten Gehäusekörpers 17, 21 geführt. Dabei weist das Betätigungselement 85 einen ersten zylinderförmigen Abschnitt auf, mit dem das Betätigungselement in dem ersten Gehäusekörper 17 geführt ist. Zudem weist das Betätigungselement 85 einen auch zweiten zylinderförmigen Abschnitt mit verringertem Querschnitt auf, mit dem das Betätigungselement in dem zweiten Gehäusekörper 21 geführt ist. Mittels der Kugelführungen wird dabei eine Zentrierung des linear verlagerbaren Betätigungselements 85 und der Spannscheibe 27 bezüglich der zylinderförmigen Ausnehmungen 117, 119 und somit der Gehäusekörper 17, 21 realisiert.

Weiter ist das stabförmige Betätigungselement 85 hier mit einem Endbereich 121 verdrehfest mit einem unterhalb des zweiten Gehäusekörpers 21 angeordneten Kolben 123 des Adapter-Basiskörpers 15 verbunden. Der Kolben 123 ist Teil einer mit Druckluft betriebenen ZylinderKolben-Einheit der Wuchtvorrichtung 7, die eine Antriebseinrichtung bzw. einen Aktuator zur linearen Verlagerung des Betätigungselements 85 und somit auch des damit gekoppelten Spannelements 33 des Wuchtadapters 1 bildet. Die Weiteren Komponenten dieser Antriebseinrichtung sind Bestandteil der Basisstation 5 der Wuchtvorrichtung 7. Zwischen dem Kolben 123 und dem Gehäusekörper 21 sind hier zudem Druckfedern 99 angeordnet, die eine axiale Vorspannung des Kolbens 123 weg von dem Gehäusekörper 21 nach unten bewirken.

Konkret ist das Betätigungselement 85 hier mittels einer Schraubverbindung mit dem Kolben 123 verbunden, wobei eine Schraube 134 durch eine axial durchgängige Ausnehmung des Kolbens 123 geführt und in eine stirnseitige Gewindebohrung des Betätigungselements 85 eingeschraubt ist. Der Endbereich 121 des Betätigungselements 85 weist hier zudem umfangsseitige Ausnehmungen auf, in die zylinderförmige Stifte 135 des Kolbens 123 konturangepasst eingreifen, so dass eine Verdrehung des Betätigungselements 85 relativ zu dem Kolben 123 verhindert ist.

Des Weiteren kann das stabförmige Betätigungselement 85 mittels des Kolbens 123 zwischen einer Ausgangsstellung und einer Endstellung linear verlagert werden. In Fig. 2 ist das Betätigungselement 85 dabei in einer Spannstellung zwischen der Ausgangsstellung und der Endstellung angeordnet. In der Endstellung ist das Betätigungselement 85 im Vergleich zur Ausgangsstellung nach oben verlagert. Im montierten Zustand des Wuchtadapters 1 wird durch Verlagerung des Betätigungselements 85 das mit dem Betätigungselement 85 gekoppelte Spannelement 33 der Spannscheibe 27 mitverlagert und somit das Spannelement 33 relativ zu dem Federelement 31 verlagert.

Bei der in Fig. 2 gezeigten Anordnung der Montageeinheit 65, bei der die Hauptflächenwand 101 des Federelements 31 in Anlage mit dem Adapter-Basiskörper 15 ist, wird das Federelement 31 durch Verlagerung des mit dem Spannelement 31 gekoppelten Betätigungselements 65 von der Ausgangsstellung in die Endstellung nach oben unter Wirkung der Konusflächen radial nach außen aufgedrückt. Von dem Federelement 31 wird auch das mit dem Federelement 31 verbundene Adapterelement 35 mit den Spannstegen 81 nach außen aufgedrückt. Dabei entspannen sich das in Radialrichtung r gespannte Federelement 31 und das ebenfalls in Radialrichtung r gespannte Adapterelement 35. Somit kann bei einer derartigen Verlagerung des Betätigungselements 85 der Spanndurchmesser d vergrößert und ein eingespanntes Werkstück gelöst werden. Durch entgegengesetzte Verlagerung des Betätigungselements 85 von der Endstellung in die Ausgangsstellung nach unten wird das Federelement 31 hier hingegen radial nach innen zusammengezogen. Von dem Federelement 31 wird dann auch das mit dem Federelement 31 verbundene Adapterelement 35 mit den Spannstegen 81 nach innen zusammengezogen. Dabei werden das Federelement 31 und das Adapterelement 35 in Radialrichtung gespannt. Dadurch kann bei einer derartigen Verlagerung des Betätigungselements 85 der Spanndurchmesser d verringert und ein Werkstück von außen eingespannt werden.

Im Folgenden wird nun nochmals die Montage des Wuchtadapters 1 näher erläutert. Zunächst wird dabei die Montageeinheit 65, die aus dem Federelement 31 und dem Spannelement 33 besteht, mit dem stabförmigen Betätigungselement 85 des Adapter-Basiskörpers 15 verbunden. Anschließend wird das, die Spannstege 81 aufweisende Adapterelement 35 mit der Montageeinheit 65 zu der Spannscheibe 27 verbunden. Schließlich wird dann die Spannscheibe 27 noch mittels der Fixiereinrichtung 107 an dem Adapter-Basiskörper 15 des Wuchtadapters 1 befestigt.

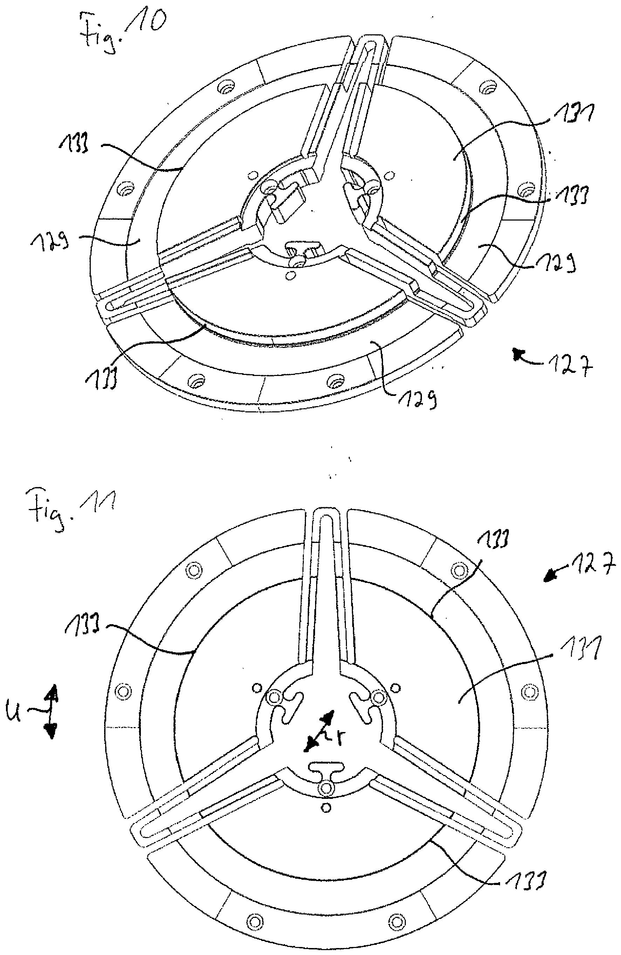

In den Fig. 9 bis 11 ist eine zweite Ausführungsform eines Wuchtadapters 125 mit einer erfindungsgemäßen Spannvorrichtung gezeigt. Im Vergleich zu der in den Fig. 1 bis 8 gezeigten Ausführungsform weist der Wuchtadapter 125 hier kein Adapterelement 35, sondern ein Adapterelement 127 auf. Das Adapterelement 127 weist im Vergleich zu dem Adapterelement 35 keine Spannstege 81 auf. Anstelle dessen weist das Adapterelement 127 einen in Axialrichtung x von einer Ablagefläche 129 des Adapterelements 127 abragenden, radial innerhalb der Ablagefläche 129 angeordneten zylinderförmigen Spannsockel 131 auf, dessen der Ablagefläche 129 zugewandte Wandbereiche 133 die Spannflächen zur Einspannung eines auszuwuchtenden Werkstücks ausbilden. Mittels des Adapterelements 127 können hier somit Werkstücke von innen eingespannt werden.

Zudem ist im in Fig. 9 gezeigten montierten Zustand des Wuchtadapters 125 die Montageeinheit in einer um 180° gewendeten Drehposition angeordnet, so dass das Federelement 31 hier mit der Hauptflächenwand 105 in Anlage mit dem Anlage-Wandbereich 103 des Adapter-Basiskörpers 15 ist. Somit wird das Federelement 31 hier durch Verlagerung des mit dem Spannelement 33 gekoppelten Betätigungselements 85 von der Ausgangsstellung in die in Fig. 9 gezeigten Endstellung nach oben unter Wirkung der Konusflächen radial nach innen zusammengezogen. Von dem Federelement 31 wird auch das mit dem Federelement 31 verbundene Adapterelement 127 nach innen zusammengezogen. Dabei entspannen sich das in Radialrichtung r gespannte Federelement 31 und das ebenfalls in Radialrichtung r gespannte Adapterelement 35. Somit kann auch hier bei einer derartigen Verlagerung des Betätigungselements 85 der Spanndurchmesser d verringert und ein eingespanntes Werkstück gelöst werden.

Durch entgegengesetzte Verlagerung des Betätigungselements 85 von der Endstellung in die Ausgangsstellung nach unten wird das Federelement 31 hier hingegen unter Wirkung der Konusflächen radial nach außen aufgedrückt. Von dem Federelement 31 wird dann auch das mit dem Federelement 31 verbundene Adapterelement 127 mit dem Spannsockel 131 nach außen aufgedrückt. Dabei werden das Federelement 31 und das Adapterelement 35 in Radialrichtung r gespannt. Dadurch kann bei einer derartigen Verlagerung des Betätigungselements 85 der Spanndurchmesser d vergrößert und ein Werkstück von innen eingespannt werden.

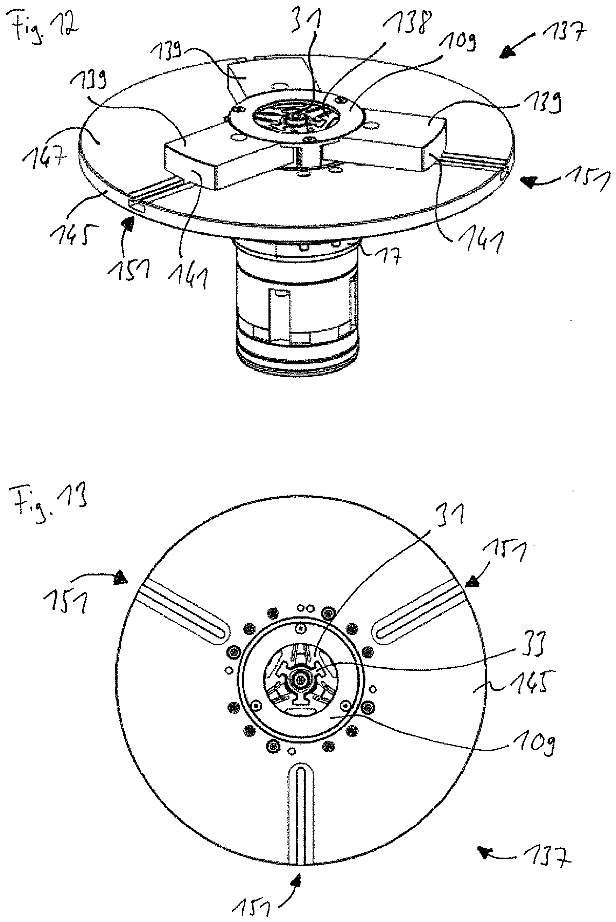

In den Fig. 12 bis 14 ist eine dritte Ausführungsform eines Wuchtadapters 137 mit einer erfindungsgemäßen Spannvorrichtung gezeigt. Im Vergleich zu der in den Fig. 1 bis 8 gezeigten ersten Ausführungsform weist der Wuchtadapter 137 einen Spannkörper 138 auf. Der Spannkörper 138 weist kein scheibenförmiges Adapterelement 35, sondern mehrere, hier beispielhaft drei, blockförmige bzw. klotzartige Adapterelemente 139 auf. Jedes Adapterelement 139 ist mit dem Federelement 31 des Spannkörpers 138 verbunden und weist eine Spannfläche 141 zum Einspannen eines Werkstücks auf. Dabei sind die Adapterelemente 139 gleichmäßig um das scheibenförmige Federelement 31 verteilt angeordnet.

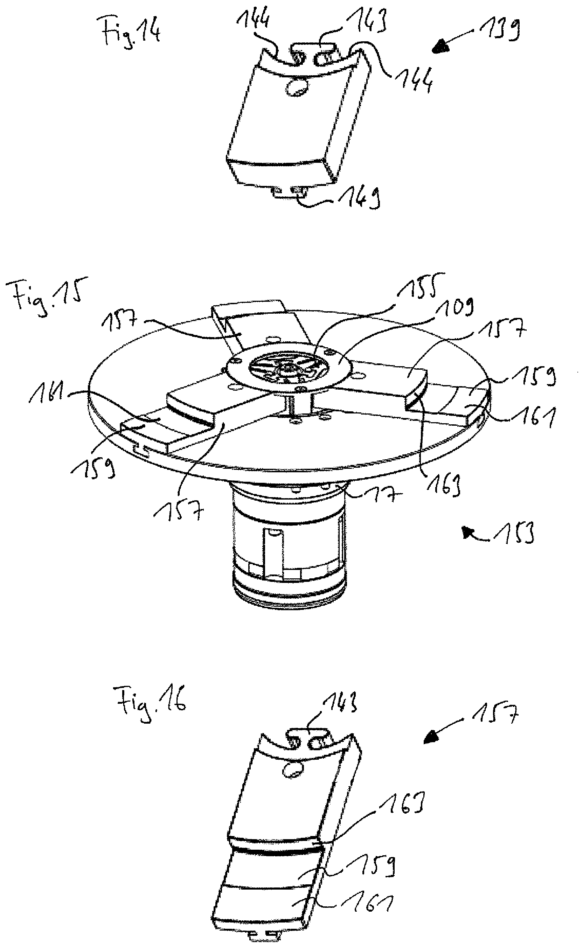

Zur Verbindung des jeweiligen Adapterelements 139 mit dem Federelement 31 weist jedes Adapterelement 139 einen abragenden Steg 143 (Fig. 14) auf, der hier beispielhaft im Querschnitt T-förmig ist. Im verbundenen Zustand des jeweiligen Adapterelements 139 und des Federelements 31 ist der Steg 143 unter Ausbildung eines Hintergriffs konturangepasst in einer der Stegaufnahmen 77 des Federelements 31 angeordnet. Dabei können hier sowohl der Steg 143 als auch die seitlich an den Steg 143 angrenzenden, dem Federelement 31 zugewandten Wandbereiche 144 des jeweiligen Adapterelements 139 in flächiger Anlage mit dem Federelement 31 sein. Die seitlichen Wandbereiche 144 sind dabei konturangepasst zu korrespondierenden äußeren Wandbereichen des Federelements 31 ausgebildet.

Wie aus den Fig. 12 weiter hervorgeht, ist der Gehäusekörper 17 hier an einem oberen Bereich mit einem Scheibenkörper 145 des Wuchtadapters 137 verbunden, der nach außen von dem Gehäusekörper 17 abragt. Der Scheibenkörper 145 bildet hier eine Ablagefläche 147 des Wuchtadapters 137 zur Ablage eines auszuwuchtenden Werkstücks auf. Des Weiteren liegen auch die Adapterelemente 139 auf dem Scheibenkörper 145 auf.

Gemäß Fig. 14 weist jedes Adapterelement 139 zudem eine abragende Führungsschiene 149 auf, die hier beispielhaft im Querschnitt T-förmig ist. Mit diesen Führungsschienen 149 greifen die Adapterelemente 139 unter Ausbildung eines Hintergriffs konturangepasst in korrespondierende Schienenaufnahmen bzw. Aufnahmenuten 151 des Scheibenkörpers 145 ein. Die Führungsschienen 149 und die Schienenaufnahmen 151 sind hier dabei derart ausgebildet, dass die Adapterelemente 139 relativ zu dem Scheibenkörper 145 radial verlagert werden können.

Mittels der Adapterelemente 139 kann ein auszuwuchtendes Werkstück von innen eingespannt werden. Hierzu wird im montierten Zustand des Spannkörpers 138 das Federelement 31 bei einer Verlagerung des Spannelements 33 relativ zu dem Federelement 31 in einer ersten Axialrichtung in Radialrichtung r nach außen aufgedrückt, so dass sich der Außendurchmesser des Federelements 31 vergrößert. Von dem Federelement 31 werden die Adapterelemente 139 dann nach außen von dem zentralen Spannelement 33 weg gedrückt bzw. bewegt, wobei sich der Spanndurchmesser des Spannkörpers 138 vergrößert. Zum Lösen eines eingespannten Werkstücks wird das Spannelement 33 relativ zu dem Federelement 31 in einer entgegengesetzten zweiten Axialrichtung verlagert. Dadurch wird das Federelement 31 von dem Spannelement 33 in Radialrichtung r zusammengezogen, so dass sich der Außendurchmesser des Federelements 31 verringert. Von dem Federelement 31 werden die Adapterelemente 139 dann nach innen hin zu dem zentralen Spannelement 33 gezogen bzw. bewegt, wobei sich der Spanndurchmesser des Spannkörpers 138 verringert.

In den Fig. 15 bis 16 ist eine vierte Ausführungsform eines Wuchtadapters 153 mit einer erfindungsgemäßen Spannvorrichtung gezeigt. Der Wuchtadapter 153 weist einen Spannkörper 155 mit Adapterelementen 157 auf. Im Vergleich zu den in den Fig. 12 und 14 gezeigten Adapterelementen 139 weist jedes Adapterelement 157 einen Ablagebereich 159 auf, der eine Ablagefläche 161 für ein auszuwuchtendes Werkstück ausbildet. Somit können die Werkstücke hier auf den gleichmäßig um das Federelement 31 verteilten Ablageflächen 161 der Adapterelemente 157 abgelegt und mittels des Spannkörpers 155 von innen eingespannt werden. Eine Spannfläche 153 des jeweiligen Adapterelements 157 ist dabei durch einen stufenartigen Übergang zwischen dem Ablagebereich 159 und einen, den Verbindungssteg 143 aufweisenden Bereich des Adapterelements 157 ausgebildet. Alternativ könnten die blockförmigen Adapterelemente 157 auch derart ausgebildet sein, dass mittels diesen ein Werkstück von außen eingespannt werden kann.

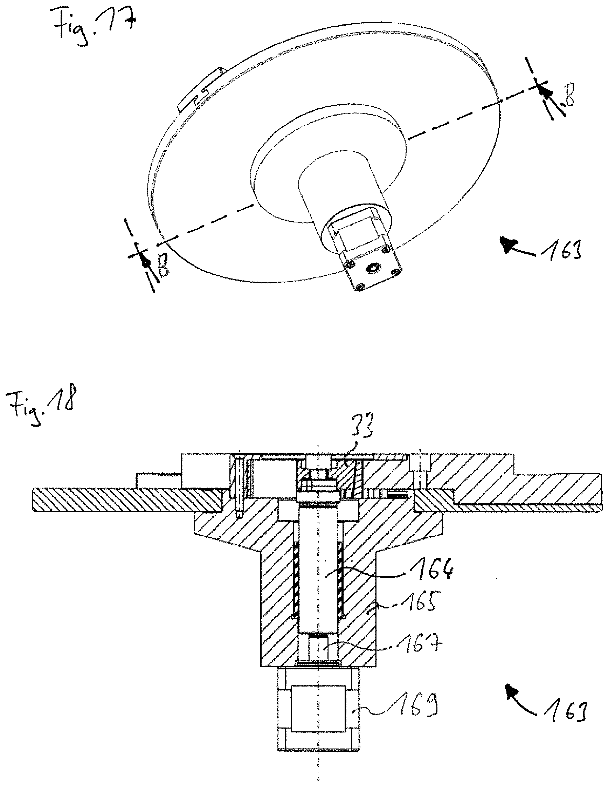

In den Fig. 17 bis 18 ist eine fünfte Ausführungsform eines Wuchtadapters 163 mit einer erfindungsgemäßen Spannvorrichtung gezeigt. Der Wuchtadapter 163 weist ein stabförmiges Betätigungselement 164 auf, das kürzer ausgeführt ist als das Betätigungselement 85. Zudem ist das Betätigungselement 164 unter Zwischenlage einer Kugelführung, insbesondere eines Kugelkäfigs, linear verlagerbar in einer zylinderförmigen Ausnehmung eines im Wesentlichen rotationssymmetrischen Gehäusekörpers 165 des Wuchtadapters 163 geführt.

Des Weiteren ist das stabförmige Betätigungselement 164 hier an einem dem Spannelement 33 abgewandten Endbereich mit Hubkolben 167 eines Elektromotors 169 verbunden. Der Elektromotor 169 bildet eine Antriebsvorrichtung bzw. einen Aktuator zur linearen Verlagerung des Betätigungselements 164 und somit auch des damit gekoppelten Spannelements 33 des Wuchtadapters 163. Dabei kann das Betätigungselement 164 mittels des Elektromotors 169 wiederum zwischen einer Ausgangsstellung und einer Endstellung linear verlagert werden.

Anstelle des Elektromotors können auch andere Aktuatoren vorgesehen sein, die z. B. hydraulisch oder pneumatisch angetrieben sein können. Bevorzugt sind solche Aktuatoren vorgesehen, die eine Verlagerung des Spannelementes 33 sowohl in der ersten als auch in der zweiten Axialrichtung erlauben.

**Bezugszeichenliste**

| | | | |
|---|---|---|---|
| 1 | Wuchtadapter | 41 | Steg |
| 3 | Fixierbereich | 43 | Scheibenabschnitt |
| 5 | Basisstation | 45 | zentraler Bereich |
| 7 | Wuchtvorrichtung | 47 | Steg |
| 9 | Antriebsspindel | 49 | Schienenaufnahme |
| 11 | Wuchtadapter-Aufnahme | 51 | T-Basis |
| 13 | Werkstück | 53 | Wandbereich |
| 15 | Adapter-Basiskörper | 55 | T-Dach |
| 17 | Gehäusekörper | 57 | Wandbereich |
| 19 | Schraubverbindungen | 59 | Wandbereich |
| 21 | Gehäusekörper | 61 | Wandbereich |
| 23 | Scheibenkörper | 63 | Vertiefung |
| 25 | Spanneinrichtung | 65 | Montageeinheit |
| 27 | Spannscheibe | 67 | Federabschnitt |
| 29 | Ablagefläche | 69 | Steg |
| 31 | Federelement | 71 | Scheibenabschnitt |
| 33 | Spannelement | 73 | Ausnehmung |
| 35 | Adapterelement | 75 | Steg |
| 37 | Ausnehmung | 77 | Stegaufnahme |
| 39 | Federabschnitt | 79 | Wandbereich |
| 81 | Spannsteg | 119 | Ausnehmung |
| 83 | Wandbereich | 121 | Endbereich |
| 85 | Betätigungselement | 123 | Kolben |
| 87 | Betätigungseinrichtung | 125 | Wuchtadapter |
| 89 | Endbereich | 127 | Adapterelement |
| 91 | Ausnehmung | 129 | Ablagefläche |
| 93 | Ausnehmung | 131 | Spannsockel |
| 95 | Schulter | 133 | Wandbereich |
| 97 | Schraube | 134 | Schraube |
| 99 | Druckfeder | 135 | Stift |
| 101 | Hauptflächenwand | 136 | Planauflage |
| 103 | Anlage-Wandbereich | 137 | Wuchtadapter |
| 105 | Hauptflächenwand | 138 | Spannkörper |
| 107 | Fixiereinrichtung | 139 | Adapterelement |
| 109 | Fixierelement | 141 | Spannfläche |
| 111 | Spannring | 143 | Steg |
| 112 | Wandbereich | 145 | Scheibenkörper |
| 113 | Eingriffssteg | 147 | Ablagefläche |
| 114 | Ausnehmung | 149 | Führungsschiene |
| 115 | Schraube | 151 | Schienenaufnahme |
| 117 | Ausnehmungen | 153 | Spannfläche |
| 155 | Spannkörper | | |
| 157 | Adapterelement | | |
| 159 | Ablagebereich | | |
| 161 | Ablagefläche | | |
| 163 | Wuchtadapter | | |
| 164 | Betätigungselement | | |
| 165 | Gehäusekörper | | |
| 167 | Hubkolben | | |
| 169 | Elektromotor | | |
| α | Konuswinkel | | |
| d | Spanndurchmesser | | |

## Patentansprüche

1. Spannvorrichtung zum Einspannen eines Gegenstands, insbesondere eines auszuwuchtenden Werkstücks, mit einer Spanneinrichtung (25) zur Einspannung des Gegenstands, wobei die Spanneinrichtung (25) eine Stelleinrichtung aufweist, mittels der der Spanndurchmesser (d) eines Spannkörpers (27; 138; 155) der Spanneinrichtung (25) verstellbar ist, wobei durch Verstellung des Spanndurchmessers (d) ein, insbesondere auf wenigstens einer Ablagefläche abgelegter, Gegenstand einspannbar ist, wobei der Spannkörper (27; 138; 155) ein scheibenförmiges, in Radialrichtung (r) federndes Federelement (31) mit einer zentral angeordneten Ausnehmung (37) aufweist, die wenigstens einen ersten Federelement-Konus ausbildet,
wobei der Spannkörper (27; 138; 155) ein in die Ausnehmung (37) des Federelements (31) eingesetztes Spannelement (33) mit wenigstens einem zu dem ersten Federelement-Konus korrespondierenden ersten Spannelement-Konus aufweist, und
wobei die Stelleinrichtung eine Betätigungseinrichtung (87) aufweist, mittels der das Spannelement (33) relativ zu dem Federelement (31), in Spannscheiben-Axialrichtung (x), verlagerbar ist, dergestalt, dass sich erste Konusflächen des ersten Spannelement-Konus und des ersten Federelement-Konus relativ zueinander bewegen und somit das Federelement (31) unter Wirkung der Konusflächen in Radialrichtung (r) spannbar und/oder entspannbar ist,
**dadurch gekennzeichnet, dass**
die Ausnehmung (37) des Federelementes (31) einen zweiten Federelement-Konus ausbildet und dass das Spannelement einen zu diesem zweiten Federelement-Konus korrespondierenden zweiten Spannelement-Konus aufweist, welche jeweils entsprechende zweite Konusflächen aufweisen, dass
das Spannelement (33) und das Federelement (31) eine Montageeinheit (65) ausbilden, welche in einer ersten Drehposition anordenbar ist, in der eine erste Hauptflächenwand (101) des Federelements in Anlage mit einem definierten Anlage-Wandbereich (103) ist, und welche in einer zweiten, um 180° gewendeten, Drehposition anordenbar ist, in der eine zweite Hauptflächenwand (105) des Federelements (31) in Anlage mit dem definierten Anlage-Wandbereich (103) ist,
wobei die Betätigungseinrichtung (87) ein zwischen einer Ausgangsstellung und einer Endstellung verlagerbares Betätigungselement (85) aufweist, das derart mit dem Spannelement (33) des Spannkörpers (27) koppelbar ist, dass das Betätigungselement (85) das Spannelement (33) bei einer Verlagerung zwischen der Ausgangstellung und der Endstellung mitverlagert, und
wobei für den Fall, dass die Montageeinheit (65) in der zweiten Drehposition angeordnet ist, das Federelement (31) durch Verlagerung des mit dem Spannelement (33) gekoppelten Betätigungselements (85) von der Endstellung in die Ausgangsstellung unter Wirkung der zweiten Konusflächen radial nach außen aufdrückbar ist, und wobei für den Fall, dass die Montageeinheit (65) in der ersten Drehposition festgelegt ist, das Federelement (31) durch Verlagerung des mit dem Spannelement (33) gekoppelten Betätigungselements (85) von der Endstellung in die Ausgangsstellung unter Wirkung der ersten Konusflächen radial nach innen zusammenziehbar ist.

2. Spannvorrichtung nach Anspruch 1, **dadurch gekennzeichnet, dass** das Spannelement (33) und das Federelement (31) eine scheibenförmige Montageeinheit (65) ausbilden.

3. Spannvorrichtung nach Anspruch 2, **dadurch gekennzeichnet, dass** in der ersten Drehposition die erste Hauptflächenwand (101) des Federelements in flächige Anlage mit dem definierten Anlage-Wandbereich (103) bringbar ist und dass in der zweiten Drehposition die zweite Hauptflächenwand (105) des Federelements (31) in flächige Anlage mit dem definierten Anlage-Wandbereich (103) bringbar ist.

4. Spannvorrichtung nach einem der vorhergehenden Ansprüche, **dadurch gekennzeichnet, dass** das Betätigungselement (85) stabförmig ist.

5. Spannvorrichtung nach einem der vorhergehenden Ansprüche, **dadurch gekennzeichnet, dass** das Betätigungselement (85) zylinderförmig ist.

6. Spannvorrichtung nach Anspruch 4, **dadurch gekennzeichnet, dass** das stabförmige Betätigungselement (85) und das Spannelement (33) verdrehfest und/oder lösbar miteinander verbindbar sind, wobei bevorzugt vorgesehen ist, dass ein Endbereich (89) des stabförmigen Betätigungselements (85) einen unrunden und/oder polygonförmigen Querschnitt aufweist, mit dem das Betätigungselement (85) konturangepasst in wenigstens einer korrespondierenden Ausnehmung (91, 93) des Spannelements (33) anordenbar ist.

7. Spannvorrichtung nach einem der vorhergehenden Ansprüche, **dadurch gekennzeichnet, dass** der wenigstens eine Konus des Spannelements (33) und/oder der wenigstens eine Konus des Federelements (31) einen Konuswinkel aufweisen, der in einem Bereich von 1° bis 20°, insbesondere in einem Bereich von 1° bis 10°, liegt.

8. Spannvorrichtung nach einem der vorhergehenden Ansprüche, **dadurch gekennzeichnet, dass** das Spannelement (33) und das Federelement (31) mittels einer Hintergriffsverbindung und/oder mittels einer flächigen Anlageverbindung, insbesondere lösbar, miteinander verbunden sind.

9. Spannvorrichtung nach einem der vorhergehenden Ansprüche, **dadurch gekennzeichnet, dass** das Spannelement (33) einen, insbesondere zylinderförmigen und/oder kegelförmigen, zentralen Bereich (45) und mehrere von dem zentralen Bereich (45) nach au-ßen abragende Führungsschienen (47) aufweist, wobei jede Führungsschiene (47) unter Ausbildung eines Hintergriffs konturangepasst in einer korrespondierenden Schienenaufnahme (49) des Federelements (33) einliegt, wobei bevorzugt vorgesehen ist, dass jede Führungsschiene (47) im Querschnitt T-förmig ausgebildet ist.

10. Spannvorrichtung nach Anspruch 9, **dadurch gekennzeichnet, dass** jede Führungsschiene (47) im Querschnitt T-förmig ausgebildet ist, dass jede Führungsschiene (47) mit der T-Basis mit dem zentralen Bereich (45) des Spannelements (33) verbunden ist, dass die dem zentralen Bereich (45) des Spannelements (33) abgewandten Wandbereiche (53) des T-Dachs (55) der Führungsschienen (47) einen Außenkonus des Spannelements (33) ausbilden und in flächiger Anlage mit, einen Innenkonus bildenden Wandbereichen (57) des Federelements (31) sind oder bringbar sind, und dass die dem zentralen Bereich (45) des Spannelements (33) zugewandten Wandbereiche (59) des T-Dachs (55) der Führungsschienen (47) einen Innenkonus des Spannelements (33) ausbilden und in flächiger Anlage mit, einen Außenkonus bildenden Wandbereichen (61) des Federelements (31) sind oder bringbar sind.

11. Spannvorrichtung nach Anspruch 10, **dadurch gekennzeichnet, dass** das T-Dach (55) der Führungsschienen (47) quaderförmig und/oder blockförmig ausgebildet ist, und/oder dass die den Außenkonus und den Innenkonus bildenden Konusflächen der Führungsschienen (47) ebenflächig oder bogenförmig gekrümmt ausgebildet sind.

12. Spannvorrichtung nach einem der vorhergehenden Ansprüche, **dadurch gekennzeichnet, dass** das scheibenförmige Federelement (31) mehrere, in Umfangsrichtung (U) gleichmäßig verteilt angeordnete Federabschnitte (39) aufweist, mittels denen das Federelement in (31) Radialrichtung (r) federbar ist, wobei, in Spannscheiben-Umfangsrichtung (U) gesehen, zwischen den Federabschnitten (39) angeordnete Scheibenabschnitte (43) des Federelements (31) über die Federabschnitte (39) miteinander verbunden sind.

13. Spannvorrichtung nach Anspruch 12, **dadurch gekennzeichnet, dass** die Federabschnitte (39) durch dünnwandige Stege (41) des Federelements (31) gebildet sind, die in Draufsicht auf das Federelement (31) gesehen, einen im Wesentlichen wellenförmigen und/oder mäanderförmigen und/oder bogenförmigen und/oder V-förmigen Verlauf aufweisen.

14. Spannvorrichtung nach einem der vorhergehenden Ansprüche, **dadurch gekennzeichnet, dass** der Spannkörper (27) ein scheibenförmiges, in Radialrichtung (r) federndes Adapterelement (35; 127) aufweist und somit als Spannscheibe ausgebildet ist, wobei das Adapterelement (35; 127) eine zentral angeordnete, Ausnehmung (73) aufweist, in die das Federelement (31) der Spannscheibe (27) eingesetzt ist, und wobei das Adapterelement (35; 127) wenigstens eine Spannfläche zur Einspannung eines Gegenstands aufweist.

15. Spannvorrichtung nach Anspruch 14, **dadurch gekennzeichnet, dass** durch die Verstellung des Spanndurchmessers (d) des Spannkörpers (27; 138; 155) der Spanneinrichtung (25) mittels der Stelleinrichtung der Spanneinrichtung (25) ein auf wenigstens einer Ablagefläche abgelegter Gegenstand einspannbar ist, wobei das Adapterelement (127) die Ablagefläche (129) zur Ablage eines auszuwuchtenden Werkstücks aufweist, und dass das Adapterelement (127) einen in Spannscheiben-Axialrichtung (x) von der Ablagefläche (129) abragenden, innerhalb der Ablagefläche (129) angeordneten, insbesondere zylinderförmigen, Spannsockel (131) aufweist, dessen der Ablagefläche (129) zugewandte Wandbereiche (133) Spannflächen zur Einspannung des Gegenstands ausbilden.

16. Spannvorrichtung nach Anspruch 14, **dadurch gekennzeichnet, dass** durch die Verstellung des Spanndurchmessers (d) des Spannkörpers (27; 138; 155) der Spanneinrichtung (25) mittels der Stelleinrichtung der Spanneinrichtung (25) ein auf wenigstens einer Ablagefläche abgelegter Gegenstand einspannbar ist, wobei das Adapterelement (35) die Ablagefläche (29) zur Ablage eines auszuwuchtenden Werkstücks aufweist, und dass das Adapterelement (35) mehrere in Spannscheiben-Axialrichtung (x) von der Ablagefläche (29) abragende, außerhalb der Ablagefläche (29) angeordnete, insbesondere dünnwandige, Spannstege (81) aufweist, deren der Ablagefläche (29) zugewandte Wandbereiche (83) Spannflächen zur Einspannung des Gegenstands ausbilden.

17. Spannvorrichtung nach einem der Ansprüche 1 bis 13, **dadurch gekennzeichnet, dass** der Spannkörper (138; 155) mehrere mit dem Federelement (31) verbundene blockförmige Adapterelemente (139; 157) aufweist, wobei jedes Adapterelement (139; 157) wenigstens eine Spannfläche (141; 153) zur Einspannung eines Gegenstands aufweist, wobei bevorzugt vorgesehen ist, dass jedes Adapterelement (139; 157) mittels einer Hintergriffsverbindung und/oder einer, insbesondere flächigen, Anlageverbindung mit dem Federelement (31) verbunden ist.

18. Spannvorrichtung nach einem der vorhergehenden Ansprüche, **dadurch gekennzeichnet, dass** eine Fixiereinrichtung (107) vorgesehen ist, mittels der der Spannkörper (27) an einem Basiskörper (15) der Spannvorrichtung (1) festgelegt ist.

19. Spannvorrichtung nach Anspruch 18, **dadurch gekennzeichnet, dass** die Fixiereinrichtung (107) ein Fixierelement (109) mit einem Spannring (111) aufweist, der in, insbesondere flächiger, Anlage mit wenigstens einem dem Basiskörper (15) abgewandten Wandbereich (112) des Federelements (31) und/oder des Adapterelements (35) ist oder bringbar ist, wobei das Fixierelement (109) mehrere von dem Spannring (111) abragende, insbesondere zylinderförmige, Eingriffsstege (113) aufweist, die konturangepasst in korrespondierende Ausnehmungen (114) des Federelements (31) und/oder des Adapterelements (35) eingreifen.

20. Wuchtadapter für eine Wuchtvorrichtung, mit einer Spannvorrichtung nach einem der vorhergehenden Ansprüche.

21. Wuchtvorrichtung, mit einem Wuchtadapter (1) nach Anspruch 20, wobei bevorzugt vorgesehen ist, dass die Wuchtvorrichtung (7) eine Basisstation (5) mit einer Wuchtadapter-Aufnahme (11) zur Aufnahme des Wuchtadapters (1) aufweist, und dass die Basisstation (5) eine Dreh-Antriebseinrichtung (9) zum Drehantrieb des aufgenommenen Wuchtadapters (1) und/oder zumindest einen Teil einer Antriebseinrichtung (123; 169) zur, insbesondere linearen, Verlagerung des Spannelements (33) relativ zu dem Federelement (31) aufweist.

22. Spannvorrichtungs-Set mit einer Spannvorrichtung nach einem der Ansprüche 1 bis 19, einem Basiskörper (15) und mehreren Adapterelementen (35; 127; 139; 157), wobei das Federelement (31), das Spannelement (33) und jeweils wenigstens eines der mehreren Adapterelemente (35; 127; 139; 157) zu dem Spannkörper (27; 138; 155) verbindbar sind, der mittels einer Fixiereinrichtung (107) an dem Basiskörper (15) festlegbar ist, wobei jedes Adapterelement (35; 127; 139; 157) mit dem Federelement (31) verbindbar ist, wobei jedes Adapterelement (35; 127; 139; 157) wenigstens eine Spannfläche (141; 153) zur Einspannung eines Gegenstands aufweist, und wobei sich zumindest ein Teil der Adapterelemente (35; 127; 139; 157) zumindest in der Anordnung und/oder Ausgestaltung der wenigstens einen Spannfläche (141; 153) unterscheiden.

## Claims

1. Clamping device for clamping an article, in particular a workpiece to be balanced, with a clamping means (25) for clamping the article, wherein the clamping means (25) has an adjusting means, by means of which the clamping diameter (d) of a clamping body (27; 138; 155) of the clamping means (25) can be adjusted, wherein, by adjusting the clamping diameter (d), an article, in particular placed on at least one placement surface, can be clamped, wherein the clamping body (27; 138; 155) has a disc-shaped spring element (31), which is sprung in the radial direction (r) and has a centrally arranged clearance (37), which forms at least one first spring element cone,
wherein the clamping body (27; 138; 155) has a clamping element (33), which is inserted into the clearance (37) of the spring element (31) and has at least one first clamping element cone corresponding to the first spring element cone, and
wherein the adjusting means has an actuating means (87), by means of which the clamping element (33) is displaceable in relation to the spring element (31), in the axial direction (x) of the clamping disc, in such a way that first cone surfaces of the first clamping element cone and of the first spring element cone move in relation to one another, and consequently the spring element (31) can be clamped and/or unclamped in the radial direction (r) under the effect of the cone surfaces,
**characterized in that**
the clearance (37) of the spring element (31) forms a second spring element cone and **in that** the clamping element has a second clamping element cone corresponding to the second spring element cone, which respectively have corresponding second cone surfaces,
**in that** the clamping element (33) and the spring element (31) form an assembly unit (65), which can be arranged in a first rotary position, in which a first main surface wall (101) of the spring element is in engagement with a defined engagement wall region (103), and which can be arranged in a second rotary position, turned by 180°, in which a second main surface wall (105) of the spring element (31) is in engagement with the defined engagement wall region (103),
wherein the actuating means (87) has an actuating element (85), which can be displaced between a starting position and an end position and can be coupled to the clamping element (33) of the clamping body (27) in such a way that, when there is a displacement between the starting position and the end position, the actuating element (85) also displaces the clamping element (33), and
wherein, for the case where the assembly unit (65) is arranged in the second rotary position, the spring element (31) can be pressed open radially outwardly by displacement of the actuating element (85) coupled to the clamping element (33) from the end position into the starting position under the effect of the second cone surfaces, and wherein, for the case where the assembly unit (65) is fixed in the first rotary position, the spring element (31) can be drawn together radially inwardly by displacement of the actuating element (85) coupled to the clamping element (33) from the end position into the starting position under the effect of the first cone surfaces.

2. Clamping device according to Claim 1, **characterized in that** the clamping element (33) and the spring element (31) form a disc-shaped assembly unit (65).

3. Clamping device according to Claim 2, **characterized in that**, in the first rotary position, the first main surface wall (101) of the spring element can be brought into surface engagement with the defined engagement wall region (103) and **in that**, in the second rotary position, the second main surface wall (105) of the spring element (31) can be brought into surface engagement with the defined engagement wall region (103).

4. Clamping device according to one of the preceding claims, **characterized in that** the actuating element (85) is in the form of a rod.

5. Clamping device according to one of the preceding claims, **characterized in that** the actuating element (85) is in the form of a cylinder.

6. Clamping device according to Claim 4, **characterized in that** the rod-shaped actuating element (85) and the clamping element (33) are connectable to one another in a manner preventing inappropriate turning and/or in a releasable manner, wherein it is preferably provided that an end region (89) of the rod-shaped actuating element (85) has an unround and/or polygonal cross section, with which the actuating element (85) can be arranged in a contour-adapted manner in at least one corresponding clearance (91, 93) of the clamping element (33).

7. Clamping device according to one of the preceding claims, **characterized in that** the at least one cone of the clamping element (33) and/or the at least one cone of the spring element (31) has a cone angle which lies in a range from 1° to 20°, in particular in a range from 1° to 10°.

8. Clamping device according to one of the preceding claims, **characterized in that** the clamping element (33) and the spring element (31) are connected to one another, in particular in a releasable manner, by means of a gripping-behind connection and/or by means of a surface-engaging connection.

9. Clamping device according to one of the preceding claims, **characterized in that** the clamping element (33) has a central region (45), in particular a cylindrical and/or conical central region, and multiple guiding rails (47) protruding outwardly from the central region (45), wherein each guiding rail (47) lies in a contour-adapted manner in a corresponding rail holder (49) of the spring element (33), with the formation of a gripping-behind engagement, wherein it is preferably provided that each guiding rail (47) is formed as cross-sectionally T-shaped.

10. Clamping device according to Claim 9, **characterized in that** each guiding rail (47) is formed as cross-sectionally T-shaped, **in that** each guiding rail (47) is connected by the T base to the central region (45) of the clamping element (33), **in that** the wall regions (53) of the T top (55) of the guiding rails (47) that are facing away from the central region (45) of the clamping element (33) form an outer cone of the clamping element (33) and are or can be brought into surface engagement with wall regions (57) of the spring element (31) that form an inner cone, and **in that** the wall regions (59) of the T top (55) of the guiding rails (47) that are facing towards the central region (45) of the clamping element (33) form an inner cone of the clamping element (33) and are or can be brought into surface engagement with wall regions (61) of the spring element (31) that form an outer cone.

11. Clamping device according to Claim 10, **characterized in that** the T top (55) of the guiding rails (47) is formed in the form of a cuboid and/or in the form of a block, and/or **in that** the cone surfaces of the guiding rails (47) that form the outer cone and the inner cone are formed as planar surfaces or arcuately curved.

12. Clamping device according to one of the preceding claims, **characterized in that** the disc-shaped spring element (31) has multiple spring portions (39) arranged uniformly distributed in the circumferential direction (U), by means of which the spring element (31) can be sprung in the radial direction (r), wherein, seen in the circumferential direction (U) of the clamping disc, disc portions (43) of the spring element (31) that are arranged between the spring portions (39) are connected to one another by way of the spring portions (39).

13. Clamping device according to Claim 12, **characterized in that** the spring portions (39) are formed by thin-walled webs (41) of the spring element (31), which, seen in plan view of the spring element (31), have a substantially wave-form and/or meander-form and/or arcuate and/or V-shaped profile.

14. Clamping device according to one of the preceding claims, **characterized in that** the clamping body (27) has a disc-shaped adapter element (35; 127) sprung in the radial direction (r), and is consequently formed as a clamping disc, wherein the adapter element (35; 127) has a centrally arranged clearance (73), in which the spring element (31) of the clamping disc (27) is inserted, and wherein the adapter element (35; 127) has at least one clamping surface for the clamping of an article.

15. Clamping device according to Claim 14, **characterized in that**, by the adjustment of the clamping diameter (d) of the clamping body (27; 138; 155) of the clamping means (25) by means of the adjusting means of the clamping means (25), an article placed on at least one placement surface can be clamped, wherein the adapter element (127) has the placement surface (129) for the placement of a workpiece to be balanced, and **in that** the adapter element (127) has a clamping base (131), in particular a cylindrical clamping base, which protrudes from the placement surface (129) in the axial direction (x) of the clamping disc, is arranged inside the placement surface (129) and the wall regions (133) of which that are facing towards the placement surface (129) form clamping surfaces for the clamping of the article.

16. Clamping device according to Claim 14, **characterized in that**, by the adjustment of the clamping diameter (d) of the clamping body (27; 138; 155) of the clamping means (25) by means of the adjusting means of the clamping means (25), an article placed on at least one placement surface can be clamped, wherein the adapter element (35) has the placement surface (29) for the placement of a workpiece to be balanced, and **in that** the adapter element (35) has multiple clamping webs (81), in particular thin-walled clamping webs, which protrude from the placement surface (29) in the axial direction (x) of the clamping disc, are arranged outside the placement surface (29) and the wall regions (83) of which that are facing towards the placement surface (29) form clamping surfaces for the clamping of the article.

17. Clamping device according to one of Claims 1 to 13, **characterized in that** the clamping body (138; 155) has multiple adapter elements (139; 157), in the form of blocks, connected to the spring element (31), wherein each adapter element (139; 157) has at least one clamping surface (141; 153) for the clamping of an article, wherein it is preferably provided that each adapter element (139; 157) is connected to the spring element (31) by means of a gripping-behind connection and/or an engaging, in particular surface-engaging, connection.

18. Clamping device according to one of the preceding claims, **characterized in that** a fixing means (107) is provided, by means of which the clamping body (27) is fixed on a base body (15) of the clamping device (1) .

19. Clamping device according to Claim 18, **characterized in that** the fixing means (107) has a fixing element (109) with a clamping ring (111), which is or can be brought into engagement, in particular surface engagement, with at least one wall region (112) of the spring element (31) and/or of the adapter element (35) that is facing away from the base body (15), wherein the fixing element (109) has multiple engaging webs (113), in particular cylindrical engaging webs, which protrude from the clamping ring (111) and engage in a contour-adapted manner in corresponding clearances (114) of the spring element (31) and/or of the adapter element (35).

20. Balancing adapter for a balancing device, with a clamping device according to one of the preceding claims.

21. Balancing device, with a balancing adapter (1) according to Claim 20, wherein it is preferably provided that the balancing device (7) has a base station (5) with a balancing adapter holder (11) for holding the balancing adapter (1), and in that the base station (5) has a rotary drive means (9) for the rotary drive of the held balancing adapter (1) and/or at least part of a drive means (123; 169) for the displacement, in particular linear displacement, of the clamping element (33) in relation to the spring element (31).

22. Clamping device set with a clamping device according to one of Claims 1 to 19, a base body (15) and multiple adapter elements (35; 127; 139; 157), wherein the spring element (31), the clamping element (33) and in each case at least one of the multiple adapter elements (35; 127; 139; 157) can be connected to form the clamping body (27; 138; 155), which can be fixed on the base body (15) by means of a fixing means (107),
wherein each adapter element (35; 127; 139; 157) can be connected to the spring element (31), wherein each adapter element (35; 127; 139; 157) has at least one clamping surface (141; 153) for the clamping of an article, and wherein at least some of the adapter elements (35; 127; 139; 157) differ at least in the arrangement and/or design of the at least one clamping surface (141; 153).

## Revendications

1. Dispositif de serrage permettant de serrer un objet, en particulier une pièce à équilibrer, comprenant un moyen de serrage (25) pour serrer l'objet, dans lequel le moyen de serrage (25) présente un moyen de réglage qui permet de régler le diamètre de serrage (d) d'un corps de serrage (27 ; 138 ; 155) du moyen de serrage (25), dans lequel le réglage du diamètre de serrage (d) permet de serrer un objet, en particulier déposé sur au moins une surface de dépose, dans lequel le corps de serrage (27 ; 138 ; 155) présente un élément faisant ressort (31) en forme de disque, élastique dans la direction radiale (r), pourvu d'un évidement (37) disposé au milieu qui réalise au moins un premier cône d'élément faisant ressort,
dans lequel le corps de serrage (27 ; 138 ; 155) présente un élément de serrage (33) inséré dans l'évidement (37) de l'élément faisant ressort (31) et pourvu d'au moins un premier cône d'élément de serrage correspondant au premier cône d'élément faisant ressort, et dans lequel le moyen de réglage présente un moyen d'actionnement (87) au moyen duquel l'élément de serrage (33) peut être décalé par rapport à l'élément faisant ressort (31) dans la direction axiale de disque de serrage (x), de telle sorte que des premières surfaces coniques du premier cône d'élément de serrage et du premier cône d'élément faisant ressort se déplacent l'une par rapport à l'autre et l'élément faisant ressort (31) peut ainsi être serré et/ou desserré dans la direction radiale (r) sous l'effet des surfaces coniques,
**caractérisé**
**en ce que** l'évidement (37) de l'élément faisant ressort (31) réalise un deuxième cône d'élément faisant ressort, et en ce que l'élément de serrage présente un deuxième cône d'élément de serrage correspondant audit deuxième cône d'élément faisant ressort qui présentent respectivement des deuxièmes surfaces coniques correspondantes,
**en ce que** l'élément de serrage (33) et l'élément faisant ressort (31) réalisent une unité de montage (65) qui peut être disposée dans une première position de rotation dans laquelle une première paroi de surface principale (101) de l'élément faisant ressort est en appui contre une zone de paroi d'appui (103) définie, et qui peut être disposée dans une deuxième position de rotation tournée sur 180° dans laquelle une deuxième paroi de surface principale (105) de l'élément faisant ressort (31) est en appui contre la zone de paroi d'appui (103) définie,
dans lequel le moyen d'actionnement (87) présente un élément d'actionnement (85) pouvant être décalé entre une position de départ et une position finale et qui peut être accouplé à l'élément de serrage (33) du corps de serrage (27) de telle sorte que l'élément d'actionnement (85) entraîne l'élément de serrage (33) en cas de décalage entre la position de départ et la position finale, et
dans lequel, si l'unité de montage (65) est disposée dans la deuxième position de rotation, l'élément faisant ressort (31) peut être emmanché radialement vers l'extérieur par un décalage de l'élément d'actionnement (85) accouplé à l'élément de serrage (33) de la position finale à la position de départ sous l'effet des deuxièmes surfaces coniques, et dans lequel, si l'unité de montage (65) est immobilisée dans la première position de rotation, l'élément faisant ressort (31) peut être contracté radialement vers l'intérieur par un décalage de l'élément d'actionnement (85) accouplé à l'élément de serrage (33) de la position finale à la position de départ sous l'effet des premières surfaces coniques.

2. Dispositif de serrage selon la revendication 1, **caractérisé en ce que** l'élément de serrage (33) et l'élément faisant ressort (31) réalisent une unité de montage (65) en forme de disque.

3. Dispositif de serrage selon la revendication 2, **caractérisé en ce que** dans la première position de rotation, la première paroi de surface principale (101) de l'élément faisant ressort peut être amenée en appui plan contre la zone de paroi d'appui (103) définie, et **en ce que** dans la deuxième position de rotation, la deuxième paroi de surface principale (105) de l'élément faisant ressort (31) peut être amenée en appui plan contre la zone de paroi d'appui (103) définie.

4. Dispositif de serrage selon l'une quelconque des revendications précédentes, **caractérisé en ce que** l'élément d'actionnement (85) est en forme de tige.

5. Dispositif de serrage selon l'une quelconque des revendications précédentes, **caractérisé en ce que** l'élément d'actionnement (85) est cylindrique.

6. Dispositif de serrage selon la revendication 4, **caractérisé en ce que** l'élément d'actionnement en forme de tige (85) et l'élément de serrage (33) peuvent être reliés l'un à l'autre de manière verrouillée en rotation et/ou amovible, dans lequel il est prévu de préférence qu'une zone d'extrémité (89) de l'élément d'actionnement en forme de tige (85) présente une section transversale ovale et/ou polygonale par laquelle l'élément d'actionnement (85) peut être disposé avec un contour adapté dans au moins un évidement correspondant (91, 93) de l'élément de serrage (33).

7. Dispositif de serrage selon l'une quelconque des revendications précédentes, **caractérisé en ce que** ledit au moins un cône de l'élément de serrage (33) et/ou ledit au moins un cône de l'élément faisant ressort (31) présentent un angle de cône qui est compris dans une plage de 1° à 20°, en particulier dans une plage de 1° à 10°.

8. Dispositif de serrage selon l'une quelconque des revendications précédentes, **caractérisé en ce que** l'élément de serrage (33) et l'élément faisant ressort (31) sont reliés l'un à l'autre au moyen d'un assemblage par contre-dépouille et/ou au moyen d'un assemblage par appui plan, en particulier de manière amovible.

9. Dispositif de serrage selon l'une quelconque des revendications précédentes, **caractérisé en ce que** l'élément de serrage (33) présente une zone centrale (45), en particulier cylindrique et/ou conique, et plusieurs rails de guidage (47) faisant saillie depuis la zone centrale (45) vers l'extérieur, dans lequel chaque rail de guidage (47) repose avec un contour adapté dans un logement de rail (49) correspondant de l'élément faisant ressort (33) en réalisant une contre-dépouille, dans lequel il est prévu de préférence que chaque rail de guidage (47) soit réalisé avec une section transversale en forme de T.

10. Dispositif de serrage selon la revendication 9, **caractérisé en ce que en ce que** chaque rail de guidage (47) est réalisé avec une section transversale en forme de T, **en ce que** chaque rail de guidage (47) est relié par la base du T à une zone centrale (45) de l'élément de serrage (33), **en ce que** les zones de paroi (53), détournées de la zone centrale (45) de l'élément de serrage (33), de la barre du T (55) des rails de guidage (47) réalisent un cône extérieur de l'élément de serrage (33) et sont ou peuvent être amenées en appui plan contre des zones de paroi (57), formant un cône intérieur, de l'élément faisant ressort (31), et **en ce que** les zones de paroi (59), tournées vers la zone centrale (45) de l'élément de serrage (33), de la barre du T (55) des rails de guidage (47) réalisent un cône intérieur de l'élément de serrage (33) et sont ou peuvent être amenées en appui plan contre des zones de paroi (61), formant un cône extérieur, de l'élément faisant ressort (31).

11. Dispositif de serrage selon la revendication 10, **caractérisé en ce que** la barre du T (55) des rails de guidage (47) est réalisée en forme de parallélépipède et/ou en forme de bloc, et/ou **en ce que** les surfaces coniques formant le cône extérieur et le cône intérieur des rails de guidage (47) sont réalisées à surface plane ou de manière courbée en forme d'arc.

12. Dispositif de serrage selon l'une quelconque des revendications précédentes, **caractérisé en ce que** l'élément faisant ressort (31) en forme de disque présente plusieurs parties de ressort (39) réparties régulièrement dans la direction circonférentielle (U), au moyen desquelles l'élément faisant ressort (31) peut faire ressort dans la direction radiale (r), dans lequel, vu dans la direction circonférentielle de disque de serrage (U), des parties de disque (43), disposées entre les parties de ressort (39), de l'élément faisant ressort (31) sont reliées les unes aux autres par l'intermédiaire des parties de ressort (39) .

13. Dispositif de serrage selon la revendication 12, **caractérisé en ce que** les parties de ressort (39) sont formées par des barrettes (41) à paroi mince de l'élément faisant ressort (31), qui présentent en vue de dessus sur l'élément faisant ressort (31) un tracé substantiellement ondulé et/ou en forme de méandre et/ou en forme d'arc et/ou en forme de V.

14. Dispositif de serrage selon l'une quelconque des revendications précédentes, **caractérisé en ce que** le corps de serrage (27) présente un élément d'adaptation (35 ; 127) en forme de disque, élastique dans la direction radiale (r), et est donc réalisé sous forme de disque de serrage, dans lequel l'élément d'adaptation (35 ; 127) présente un évidement (73) disposé de manière centrale, dans lequel est inséré l'élément faisant ressort (31) du disque de serrage (27), et dans lequel l'élément d'adaptation (35 ; 127) présente au moins une surface de serrage pour serrer un objet.

15. Dispositif de serrage selon la revendication 14, **caractérisé en ce que** le réglage du diamètre de serrage (d) du corps de serrage (27 ; 138 ; 155) du moyen de serrage (25) permet de serrer un objet déposé sur au moins une surface de dépose à l'aide du moyen de réglage du moyen de serrage (25), dans lequel l'élément d'adaptation (127) présente la surface de dépose (129) pour déposer une pièce à équilibrer, et **en ce que** l'élément d'adaptation (127) présente un socle de serrage (131), en particulier cylindrique, faisant saillie dans la direction axiale de disque de serrage (x) à partir de la surface de dépose (129) et disposé à l'intérieur de la surface de dépose (129), dont les zones de paroi (133) tournées vers la surface de dépose (129) réalisent des surfaces de serrage pour serrer l'objet.

16. Dispositif de serrage selon la revendication 14, **caractérisé en ce que** le réglage du diamètre de serrage (d) du corps de serrage (27 ; 138 ; 155) du moyen de serrage (25) à l'aide du moyen de réglage du moyen de serrage (25) permet de serrer un objet déposé sur au moins une surface de dépose, dans lequel l'élément d'adaptation (35) présente la surface de dépose (29) pour déposer une pièce à équilibre, et **en ce que** l'élément d'adaptation (35) présente plusieurs barrettes de serrage (81), en particulier à paroi mince, faisant saillie dans la direction axiale de disque de serrage (x) à partir de la surface de dépose (29) et disposées à l'extérieur de la surface de dépose (29), dont les zones de paroi (83) tournées vers la surface de dépose (29) réalisent des surfaces de serrage pour serrer l'objet.

17. Dispositif de serrage selon l'une quelconque des revendications 1 à 13, **caractérisé en ce que** le corps de serrage (138 ; 155) présente plusieurs éléments d'adaptation (139 ; 157) en forme de bloc, reliés à l'élément faisant ressort (31), dans lequel chaque élément d'adaptation (139 ; 157) présente au moins une surface de serrage (141 ; 153) pour serrer un objet, dans lequel il est prévu de préférence que chaque élément d'adaptation (139 ; 157) soit relié à l'élément faisant ressort (31) au moyen d'un assemblage par contre-dépouille et/ou d'un assemblage par appui, en particulier plan.

18. Dispositif de serrage selon l'une quelconque des revendications précédentes, **caractérisé en ce qu'**un moyen de fixation (107) est prévu au moyen duquel le corps de serrage (27) est immobilisé au niveau d'un corps de base (15) du dispositif de serrage (1).

19. Dispositif de serrage selon la revendication 18, **caractérisé en ce que** le moyen de fixation (107) présente un élément de fixation (109) pourvu d'une bague de serrage (111) qui est ou peut être amenée en appui, en particulier plan, contre au moins une zone de paroi (112), détournée du corps de base (15), de l'élément faisant ressort (31) et/ou de l'élément d'adaptation (35), dans lequel l'élément de fixation (109) présente plusieurs barrettes de mise en prise (113), en particulier cylindriques, faisant saillie à partir de la bague de serrage (111), qui viennent en prise avec un contour adapté dans des évidements correspondants (114) de l'élément faisant ressort (31) et/ou de l'élément d'adaptation (35).

20. Adaptateur d'équilibrage pour un dispositif d'équilibrage, comprenant un dispositif de serrage selon l'une quelconque des revendications précédentes.

21. Dispositif d'équilibrage, comprenant un adaptateur d'équilibrage (1) selon la revendication 20, dans lequel il est prévu de préférence que le dispositif d'équilibrage (7) présente une station de base (5) pourvue d'un logement d'adaptateur d'équilibrage (11) pour recevoir l'adaptateur d'équilibrage (1), et en ce que la station de base (5) présente un moyen d'entraînement en rotation (9) pour l'entraînement en rotation de l'adaptateur d'équilibrage (1) reçu, et/ou au moins une partie d'un moyen d'entraînement (123 ; 169) pour un décalage, en particulier linéaire, de l'élément de serrage (33) par rapport à l'élément faisant ressort (31).

22. Ensemble de dispositif de serrage, comprenant un dispositif de serrage selon l'une quelconque des revendications 1 à 19, un corps de base (15) et plusieurs éléments d'adaptation (35 ; 127 ; 139 ; 157), dans lequel l'élément faisant ressort (31), l'élément de serrage (33) et respectivement au moins l'un des plusieurs éléments d'adaptation (35 ; 127 ; 139 ; 157) peuvent être reliés en corps de serrage (27 ; 138 ; 155) qui peut être immobilisé contre le corps de base (15) à l'aide d'un moyen de fixation (107), dans lequel chaque élément d'adaptation (35 ; 127 ; 139 ; 157) peut être relié à l'élément faisant ressort (31), dans lequel chaque élément d'adaptation (35 ; 127 ; 139 ; 157) présente au moins une surface de serrage (141 ; 153) pour serrer un objet, et dans lequel au moins certains des éléments d'adaptation (35 ; 127 ; 139 ; 157) se distinguent au moins par la disposition et/ou la configuration de ladite au moins une surface de serrage (141 ; 153).
